# EUROPEAN PATENT APPLICATION

(11) **EP 4 759 204 A1**
(43) Date of publication of application: **17.06.2026**
(21) Application number: 24870039.5
(22) Date of filing: 23.07.2024
(51) Int. Cl.: A47J 31/40, A47J 31/42, A47J 31/44

(54) **PRE-LOADING DEVICE, INTELLIGENT FULLY-AUTOMATIC BEVERAGE MACHINE HAVING PRE-LOADING DEVICE, AND CONTROL METHOD FOR INTELLIGENT FULLY-AUTOMATIC BEVERAGE MACHINE**

(30) Priority: 26.09.2023 CN 202311252629
(71) Applicant: CAYE TECHNOLOGY (SUZHOU) CO., LTD., Suzhou, Jiangsu 215000 (CN)
(72) Inventor: WU, Peng, Suzhou, Jiangsu 215000 (CN)
(74) Representative: Michalski Hüttermann & Partner mbB
(86) International application number: PCT/CN2024/106878
(87) International publication number: WO 2025/066484

(57) **Abstract**

An intelligent fully automatic beverage device includes a device body, a brewing device, a pre-loading device, and a control device. The brewing device includes a brewing cylinder forming a brewing chamber, and a brewing mechanism for extracting and brewing a material within the brewing chamber. The pre-loading device includes a pre-loading container forming a pre-loading chamber, and a measurement mechanism for weighing the material entering the pre-loading chamber. The control device is electrically connected to the measurement mechanism. The control device controls the pre-loading of the material into the pre-loading chamber and stops further material entry when the weight measured by the measurement mechanism reaches a preset value. By incorporating the pre-loading device, the present invention enables immediate start and stop of material supply to the brewing chamber, ensuring precise and accurate transfer of material quantity from the pre-loading chamber to the brewing chamber, meeting current brewing demands, and achieving higher brewing quality. A control method of the intelligent fully automatic beverage device is also disclosed.

## Description

### TECHNICAL FIELD

The present invention relates to a field of food processing technology, specifically to a pre-loading device, an intelligent fully automatic beverage device having the pre-loading device, and a control method thereof.

### BACKGROUND

To brew a high-quality cup of coffee, many factors must be considered, with one of the more significant factors being the coffee powders. The ratio of coffee powders to water directly affects the extraction outcome, commonly referred to as the extraction rate. Baristas aim for a higher extraction rate to achieve a better cup of coffee.

Currently, coffee machines on the market, such as the widely used fully automatic coffee machines, generally employ a time-controlled method to regulate the amount of coffee powders. This involves controlling a weight of the coffee powder by adjusting an operating time of the grinding assembly. It is well known that coffee beans come in single-origin and blended varieties, but regardless of the type, there are significant differences among them. The size of coffee beans varies, as does their roast level, leading to differences in hardness. This results in certain inaccuracies when controlling the weight of coffee powders by adjusting the grinding time, which in turn leads to inconsistent quality in the extracted coffee.

For commercial settings, existing fully automatic coffee machines are unable to accurately calculate the weight of coffee powders required for each cup, resulting in significant fluctuations in the amount used per serving. This leads to wastage of coffee beans and increased business costs. Therefore, it is desirable for merchants to get a fully automatic coffee machine that can precisely fix the amount of coffee powders needed per cup to ensure consistent quality in each extraction, maintain the weight of coffee powders within a fixed margin of error for every cup, avoid waste, and save costs.

### SUMMARY

A main object of the present invention is to propose an intelligent fully automatic beverage device and a control method thereof, aiming to address the issue of unstable coffee quality caused by the inability to precisely control the amount of coffee powders in existing coffee machines.

To address the aforementioned technical issue, the present invention provides an intelligent fully automatic beverage device, comprising:
a device body;
a brewing device disposed on the device body, the brewing device including a brewing cylinder forming a brewing chamber;
a pre-loading device disposed on the device body, the pre-loading device including a pre-loading container forming a pre-loading chamber, and a measurement mechanism configured to measure a weight of a material entering the pre-loading chamber; and
a control device connected to the measurement mechanism, the control device controlling to pre-deliver the material into the pre-loading chamber, and when determining that a material weight value measured by the measurement mechanism reaches a preset weight value, controlling the pre-loading chamber to transfer the material to the brewing chamber.

Alternatively, the pre-loading container is configured to bear material, and after the measurement mechanism completes a weight measurement of the material in the pre-loading chamber, the pre-loading chamber is in communication with the brewing chamber to allow the material to enter the brewing chamber from the pre-loading chamber; and
the measurement mechanism includes a weighing sensor and/or an imaging sensor.

Alternatively, the intelligent fully automatic beverage device further includes an opening-closing component, the opening-closing component is movably installed on the pre-loading container to have an open state being in communication with the pre-loading chamber and the brewing chamber, and a closed state separating the pre-loading chamber and the brewing chamber;
when the opening-closing component is in the closed state, the measurement mechanism is configured to perform a weight measurement on the material within the pre-loading chamber.

Alternatively, the pre-loading chamber is provided with a pre-loading inlet and a pre-loading outlet; the pre-loading outlet is configured to be in communication with the brewing chamber; the opening-closing component is movably disposed at the pre-loading outlet; and the opening-closing component is in the closed state when covering the pre-loading outlet, and is in the open state when opening the pre-loading outlet;
when in the closed state, the opening-closing component is configured to receive the material entering the pre-loading chamber, and the measurement mechanism is configured to perform the weight measurement on the material received by the opening-closing component.

Alternatively, the opening-closing component is movable from the closed state to the open state along a vertical direction, so that when a weight value of the material collected at the opening-closing component reaches the preset weight value, the opening-closing component is pushed by a gravity of the material to move along the vertical direction; or
the pre-loading device further includes a first driving mechanism; and the first driving mechanism is electrically connected to the control device, so that under a control of the control device, the first driving mechanism drives the opening-closing component to switch between the open state and the closed state.

Alternatively, the pre-loading device further includes a mounting base; the mounting base connects the pre-loading container, the opening-closing component, and the measurement mechanism into an integrated unit; the pre-loading container extends through the mounting base; the pre-loading outlet is provided at a bottom side of the pre-loading container; the opening-closing component is movably connected to the mounting base located beside the pre-loading outlet, so as to be translatable towards a direction close to the pre-loading outlet to the closed state, and translatable towards a direction away from the pre-loading outlet to the open state;
the measurement mechanism includes a weighing sensor which has a mounting portion and a measuring portion; and the mounting base, the pre-loading container and the opening-closing component are collectively suspended on the measuring portion.

Alternatively, the pre-loading device further includes a first driving mechanism, and the first driving mechanism includes:
a driver, disposed on the mounting base and electrically connected to the control device, the driver having a rotary output shaft;
a driving gear, mounted on the rotary output shaft to be driven to rotate; and
a translational rack, extending in a direction towards and away from the pre-loading container, and movably disposed relative to the mounting base; the translational rack being connected to the opening-closing component; and the translational rack meshing with the driving gear.

Alternatively, the pre-loading container is provided with a pre-loading opening communicating with the pre-loading chamber, and the brewing cylinder is provided with a brewing inlet communicating with the brewing chamber;
the pre-loading container is rotatably disposed relative to the device body, to have a discharging state rotated to make the pre-loading opening face the brewing inlet, and a pre-loading state rotated to make the pre-loading opening misaligned with the brewing inlet.

Alternatively, the pre-loading device further includes a second driving mechanism; and the second driving mechanism is electrically connected to the control device, to drive the pre-loading container to switch between the discharging state and the pre-loading state under a control of the control device.

Alternatively, the intelligent fully automatic beverage device further includes a grinding device disposed on the device body; the grinding device includes a grinding cylinder forming a grinding chamber, and a grinding mechanism for grinding the material within the grinding chamber;
the control device is electrically connected to the grinding mechanism, the control device controls the grinding mechanism to start operating to pre-deliver the material into the pre-loading chamber, and when determining that the material weight value measured by the measurement mechanism reaches the preset weight value, controls the grinding mechanism to stop operating.

Furthermore, to achieve the aforementioned object, the present invention also provides a control method for the aforementioned intelligent fully automatic beverage device, including:
when receiving a work instruction, controlling to pre-deliver the material into the pre-loading chamber;
controlling the measurement mechanism to perform the weight measurement on the material entering the pre-loading chamber, obtaining a real-time weight value of the material; and
when determining that an acquisition state of the real-time weight value is normal and reaches the preset weight value, controlling the pre-loading chamber to transfer the material to the brewing chamber.

Alternatively, the intelligent fully automatic beverage device further includes a grinding device disposed on the device body; and the grinding device includes a grinding cylinder forming a grinding chamber, and a grinding mechanism for grinding the material within the grinding chamber;
the control method for the intelligent fully automatic beverage device includes:
when receiving the work instruction, controlling the grinding mechanism to start operating, to pre-deliver the material into the pre-loading chamber;
controlling the measurement mechanism to perform the weight measurement on the material entering the pre-loading chamber, obtaining the real-time weight value of the material; and
when determining that the acquisition state of the real-time weight value is normal and reaches the preset weight value, controlling the pre-loading chamber to transfer the material to the brewing chamber.

Alternatively, after a step of controlling the measurement mechanism to perform the weight measurement on the material entering the pre-loading chamber and obtaining the real-time weight value of the material, the control method for the intelligent fully automatic beverage device further includes:
when determining that the acquisition state of the real-time weight value is abnormal, controlling the grinding device to stop operating;
acquiring an anomaly type of the material, and according to the anomaly type, determining an adjustment scheme associated with the anomaly type; and
controlling the grinding device to execute an adjustment action according to the adjustment scheme.

Alternatively, before a step of, when receiving the work instruction, controlling the grinding mechanism to start operating, to pre-deliver the material into the pre-loading chamber, the control method for the intelligent fully automatic beverage device further includes:
when receiving a calibration instruction, executing a calibration operation, wherein the calibration operation includes:
controlling the grinding device to start operating to grind the material entering the grinding chamber;
controlling the measurement mechanism to perform the weight measurement on the material passing through the pre-loading chamber, obtaining a first calibration weight value of the material;
when determining that the first calibration weight value reaches the preset weight value, controlling the grinding device to stop operating, and acquiring an operating time of the grinding device; and
when the operating time differs from a preset time threshold, acquiring an operating parameter of the grinding device, and adjusting the operating parameter according to a preset rule;
repeating an execution of the calibration operation until the operating time reaches the preset time threshold.

Furthermore, to achieve the aforementioned object, the present invention also provides an intelligent fully automatic beverage device, including:
a device body;
a brewing device disposed on the device body, the brewing device including a brewing cylinder forming a brewing chamber, and a brewing mechanism for extracting and brewing a material within the brewing chamber; and
a pre-loading device disposed on the device body, the pre-loading device including a pre-loading container forming a pre-loading chamber, and a measurement mechanism configured to measure a weight of the material entering the pre-loading chamber;
wherein at least one of the brewing cylinder and the pre-loading container is movably disposed relative to the device body, to be movable towards directions approaching each other and moving away from each other; and when the brewing cylinder and the pre-loading container move towards the direction approaching each other to a preset position, the pre-loading chamber and the brewing chamber are communicatively connected.

Alternatively, the brewing cylinder is fixed relative to the device body, the pre-loading container is located between a grinding cylinder and the brewing cylinder, and the pre-loading container is movably disposed in directions towards and away from the brewing cylinder.

Alternatively, the pre-loading container is fixed relative to the device body and located between a grinding cylinder and the brewing cylinder; and the brewing cylinder is movably disposed in directions towards and away from the pre-loading container.

Furthermore, to achieve the aforementioned object, the present invention also provides an intelligent fully automatic beverage device, including:
a brewing device, the brewing device including a mounting plate, and a brewing cylinder and a brewing mechanism disposed on the mounting plate; the brewing cylinder forming a brewing chamber; the brewing mechanism being configured to extract and brew a material within the brewing chamber; and
a pre-loading device, the pre-loading device including a pre-loading container forming a pre-loading chamber, and a measurement mechanism configured to measure a weight of the material entering the pre-loading chamber;
wherein the mounting plate extends along a horizontal direction, the pre-loading container extends through the mounting plate, and at least one end portion of the pre-loading container in a vertical direction protrudes beyond a corresponding end surface of the mounting plate.

Alternatively, the mounting plate has a first surface and a second surface disposed opposite to the first surface in the vertical direction; and the first surface is located on an upper side of the second surface;
at least a part of the brewing mechanism is mounted on the first surface, and the brewing cylinder is mounted below the second surface.

Alternatively, an inner diameter of the brewing chamber at an own top end thereof is greater than an inner diameter at an own bottom end thereof.

Alternatively, a top end of the brewing cylinder is lower than a bottom end of the pre-loading container.

Alternatively, the mounting plate has a first surface and a second surface disposed opposite to the first surface in the vertical direction; and the first surface is located on an upper side of the second surface;
a bottom end of the pre-loading container and/or the second surface is extended downwardly with a dregs scraping plate.

The technical solutions provided by the present invention offer the following advantages:
in the intelligent fully automatic beverage device provided by the present invention, the control device controls the pre-loading of material into the pre-loading chamber. During this process, the measurement mechanism is capable of performing real-time weight measurement of the material entering the pre-loading chamber. When the real-time weight of the material reaches the preset value, it indicates that the amount of material currently pre-loaded in the pre-loading chamber precisely meets the brewing requirements and quality for the current brewing chamber. The control device then immediately directs the pre-loading chamber to transfer the material to the brewing chamber, providing it with accurately weighed material. By incorporating the pre-loading device, the present invention enables on-demand and precise supply of material to the brewing chamber, which ensures that the amount of material transferred from the pre-loading chamber to the brewing chamber is precisely measured, thereby fully meeting the current brewing requirements and achieving higher brewing quality.

### BRIEF DESCRIPTION OF DRAWINGS

To provide a clearer explanation of the technical solutions in the embodiments of the present invention, the following will briefly introduce the drawings required for describing the embodiments. Obviously, the drawings in the following description are merely some embodiments of the present invention. It is understandable to those of ordinary skill in the art that other drawings can be obtained based on the structures shown in these drawings without creative effort.
FIG. 1 is a perspective schematic view of a grinding device, a brewing device and a pre-loading device of an intelligent fully automatic beverage device in accordance with a first embodiment of the present invention;
FIG. 2 is a perspective schematic view of the pre-loading device in FIG. 1;
FIG. 3 is a bottom view schematic view of the pre-loading device in FIG. 1;
FIG. 4 is a structural schematic view of the pre-loading device after separating an opening-closing component in FIG. 3;
FIG. 5 is a top view schematic view of the pre-loading device in FIG. 1;
FIG. 6 is a cross-sectional schematic view taken along line A-A in FIG. 5;
FIG. 7 is a front view schematic view of the pre-loading device in FIG. 1;
FIG. 8 is a partial structural schematic view of the grinding device, the brewing device and the pre-loading device of the intelligent fully automatic beverage device in accordance with a second embodiment of the present invention;
FIG. 9 is a partial structural schematic view of the grinding device, the brewing device and the pre-loading device of the intelligent fully automatic beverage device in accordance with a third embodiment of the present invention;
FIG. 10 is a partial structural schematic view of the grinding device, the brewing device and the pre-loading device of the intelligent fully automatic beverage device in accordance with a fourth embodiment of the present invention;
FIG. 11 is a partial structural schematic view of the grinding device, the brewing device and the pre-loading device of the intelligent fully automatic beverage device in accordance with a fifth embodiment of the present invention;
FIG. 12 is a partial structural schematic view of the grinding device, the brewing device and the pre-loading device of the intelligent fully automatic beverage device in accordance with a sixth embodiment of the present invention; and
FIG. 13 is a flowchart schematic view of a control method for the intelligent fully automatic beverage device in accordance with an embodiment of the present invention.

### Reference signs:

100 grinding device; 110 grinding cylinder; 120 grinding mechanism; 200 brewing device; 210 brewing cylinder; 220 brewing mechanism; 230 mounting plate; 300 pre-loading device; 310 pre-loading container; 320 measurement mechanism; 321 mounting portion; 322 measuring portion; 323 cantilever; 330 opening-closing component; 340 first driving mechanism; 341 driver; 342 driving gear; 343 translational rack; 350 mounting base; 351 mounting groove; 360 second driving mechanism; 361 first motor; 362 first gear; 363 second gear; 364 support arm; 410 guide rod; 420 guide block; 500 third driving mechanism; 511 second motor; 512 third gear; 513 first rack; 521 third motor; 522 fourth gear; 523 second rack; 531 fourth motor; 532 fifth gear; 533 third rack; 534 connecting component.

The realization of the object, functional features, and advantages of the present invention will be further explained in conjunction with the embodiments and with reference to the accompanying drawings.

### DETAILED DESCRIPTION

The technical solutions in the embodiments of the present invention will be described clearly and completely in conjunction with the accompanying drawings in the embodiments of the present invention. Obviously, the described embodiments are only a part of the embodiments of the present invention, not all of them. Based on the embodiments of the present invention, all other embodiments obtained by those of ordinary skill in the art without creative efforts shall fall within the protection scope of the present invention.

It should be noted that if directional indications (such as top, bottom, left, right, front, back, etc.) are involved in the embodiments of the present invention, these directional indications are only used to explain the relative positional relationships and movements between components in a specific posture (as shown in the accompanying drawings). If the specific posture changes, the directional indications will change accordingly.

Besides, if descriptions such as "first", "second", etc., are involved in the embodiments of the present invention, these terms are used for descriptive purposes only and should not be construed as indicating or implying relative importance or implicitly specifying the quantity of the indicated technical features. Thus, features defined with "first", "second", etc., may explicitly or implicitly include at least one such feature. Furthermore, the meaning of "and/or" appearing throughout the text includes three parallel options. Taking "A and/or B" as an example, it includes option A, option B, and an option where both A and B are satisfied. Additionally, technical solutions from various embodiments may be combined, but this must be based on what can be achieved by those of ordinary skill in the art. When the combination of technical solutions results in contradictions or is unachievable, such a combination should be considered non-existent and not within the scope of protection claimed by the present invention.

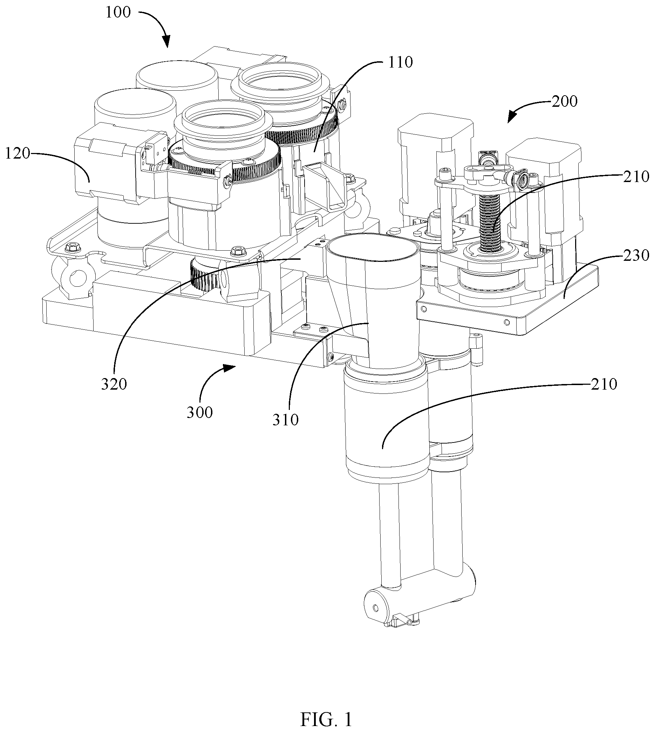

Referring to FIG. 1 to FIG. 9, the present invention discloses an intelligent fully automatic beverage device. The intelligent fully automatic beverage device includes a device body, a brewing device 200, a pre-loading device 300, and a control device. The brewing device 200 is arranged on the device body. The brewing device 200 includes a brewing cylinder 210 forming a brewing chamber, and a brewing mechanism 220 for extracting and brewing material within the brewing chamber. The pre-loading device 300 is arranged on the device body. The pre-loading device 300 includes a pre-loading container 310 forming a pre-loading chamber and a measurement mechanism 320 for weighing the material entering the pre-loading chamber. The control device is electrically connected to the measurement mechanism 320. The control device controls the pre-loading of the material into the pre-loading chamber and, upon determining that the weight of the material measured by the measurement mechanism 320 reaches a preset weight value, controls the transfer of the material from the pre-loading chamber to the brewing chamber.

In the intelligent fully automatic beverage device disclosed by the present invention, the control device controls the pre-loading of the material into the pre-loading chamber. During this process, the measurement mechanism 320 is capable of performing real-time weight measurement of the material entering the pre-loading chamber. When the real-time weight value of the material reaches the preset weight value, it indicates that the amount of material currently pre-loaded in the pre-loading chamber precisely meets the brewing requirements and quality for the current brewing chamber. The control device then immediately controls the transfer of the material from the pre-loading chamber to the brewing chamber, providing the brewing chamber with the accurately weighed material. In the present invention, by incorporating the pre-loading device 300, the supply of the material to the brewing chamber can be started and stopped instantly. This ensures that the amount of material transferred from the pre-loading chamber to the brewing chamber is precisely measured, fully matching the current brewing needs and achieving higher brewing quality.

The present invention does not impose restrictions on the specific type of intelligent fully automatic beverage device, which can be any device or product capable of extracting and brewing a material to ultimately obtain a beverage. Specifically, the intelligent fully automatic beverage device may include, but is not limited to, a coffee machine, a soymilk machine, and the like. Correspondingly, the material involved in the present invention may be leguminous materials such as coffee beans or soybeans. For ease of understanding, the following embodiments will be described using an intelligent fully automatic beverage device, specifically a coffee machine, as an example, wherein the material includes coffee beans that have not been ground by a grinding device 100, as well as the coffee powder obtained after grinding by the grinding device 100.

The device body includes an outer shell of an entire machine, with a chamber formed inside the shell. The chamber is configured to accommodate and install the aforementioned components, such as the brewing device 200, the measurement mechanism 320, and the control device. Of course, depending on actual needs, the device body may also include other functional components, such as timing devices, self-cleaning devices, which will not be elaborated on one by one.

Referring to FIG. 1, the brewing device 200 may include, but is not limited to, a brewing cylinder 210 and a brewing mechanism 220. An inside of the brewing cylinder 210 defines a brewing chamber. The brewing cylinder 210 is provided with a brewing inlet and a brewing outlet that are in communication with the brewing chamber. The brewing inlet can introduce the required amount of coffee powder (for ease of understanding, hereinafter referred to as a target demand) into the brewing chamber, after which the brewing mechanism 220 extracts and brews the coffee powder to produce coffee beverages. The brewing outlet allows the prepared coffee beverages to be dispensed externally. The brewing inlet and the brewing outlet can be defined by two separate opening structures, respectively. Alternatively, the brewing inlet and the brewing outlet can be defined by a unified opening structure, distinguished, for example, by operating time. Depending on the brewing requirements, the brewing mechanism 220 is primarily configured as a heating mechanism and/or a water supply component. Furthermore, the brewing mechanism 220 can also be configured, as needed, to include but not be limited to a cooling mechanism and/or a milk supply component, to obtain different types of coffee beverages.

In the pre-loading device 300, a pre-loading container 310 is disposed and the pre-loading container 310 defines a pre-loading chamber. Similarly, the pre-loading container 310 is provided with a pre-loading inlet and a pre-loading outlet. The pre-loading inlet allows the coffee powder to be pre-loaded into the pre-loading chamber. After the measurement mechanism 320 accurately measures the weight of the coffee powder loaded into the pre-loading chamber, the pre-loading outlet is in communication with the aforementioned brewing inlet, enabling the pre-loaded coffee powder in the pre-loading chamber, which precisely meets the target requirement, to be directly transferred into the brewing chamber. Likewise, the pre-loading inlet and the pre-loading outlet can be defined by two separate opening structures, respectively. Alternatively, the pre-loading inlet and the pre-loading outlet can be defined by a unified opening structure and distinguished, for example, by operating time.

Given the above, it is understandable that, under the control of the control device, the pre-loading chamber is pre-loaded with coffee powders. In one application, the coffee powders can be directly obtained from an external powder source which includes, but is not limited to, directly purchased coffee packets, coffee capsules, or canned coffee powders. In this case, the intelligent fully automatic beverage device may also include, for example, a coffee storage bin, which stores an appropriate amount of coffee powder source as needed. It may further include a feeding mechanism that can transfer the coffee powder source stored in the coffee storage bin to the pre-loading chamber.

Alternatively, referring to FIG. 1, in another application, the coffee powder can be obtained by grinding coffee beans. In this case, the intelligent fully automatic beverage device may also include the grinding device 100. The grinding device 100 may include, but is not limited to, a grinding cylinder 110 and a grinding mechanism 120. An inside of the grinding cylinder 110 defines a grinding chamber. The grinding mechanism 120, for example, includes a movable tool and a first driving component that drives the tool to move. The tool can be designed into the desired shape and suitable actions according to actual needs to facilitate breaking operations such as piercing, grinding, and stirring on granular materials like coffee beans, specifically such as a piercing knife, a grinding disc, etc.

The grinding cylinder 110 is provided with a grinding inlet and a grinding outlet that communicate with the grinding chamber. The grinding inlet can continuously or intermittently introduce coffee beans into the grinding chamber. When the grinding mechanism 120 grinds the coffee beans in the grinding chamber or after grinding, the grinding outlet is in communication with the pre-loading inlet of the pre-loading container 310. Similarly, the grinding inlet and the grinding outlet can be defined by two separate opening structures, respectively. Alternatively, the grinding inlet and the grinding outlet can be jointly defined by a unified opening structure and distinguished, for example, by operating time.

For ease of understanding, in the following embodiments, the intelligent fully automatic beverage device is described as being equipped with the grinding device 100 as an example. The control device is electrically connected to the grinding mechanism 120. The control device activates the grinding mechanism 120 to pre-loading material into the pre-loading chamber and stops the grinding mechanism 120 when it determines that the material weight measured by the measurement mechanism 320 reaches the preset weight value.

Given the above, the pre-loading container 310 can be a container set independently from the grinding cylinder 110 and the brewing cylinder 210, and then alignment connections are made between the pre-loading container 310, the grinding cylinder 110, and the brewing cylinder 210. In this case, the pre-loading chamber is defined solely by the pre-loading container 310. Alternatively, the pre-loading container 310 can be integrally formed with a part of the grinding cylinder 110 adjacent to the grinding outlet, in which case the pre-loading chamber is defined by a portion of the grinding cylinder 110. Alternatively, the pre-loading container 310 can be integrally formed with a part of the brewing cylinder 210 adjacent to the brewing inlet, in which case the pre-loading chamber can be defined by a portion of the brewing cylinder 210.

When the grinding cylinder 110, the pre-loading container 310, and the brewing cylinder 210 are independently arranged, they are processed and formed separately, then sequentially connected through methods such as alignment connection, abutment connection, fixed connection, or detachable connection. Specifically, the alignment connection refers to maintaining a certain distance between the grinding cylinder 110 and the pre-loading container 310, while ensuring that the grinding outlet of the grinding chamber is directly opposite the pre-loading inlet, allowing the coffee powder discharged from the grinding outlet to directly enter the pre-loading chamber via the pre-loading inlet. The abutment connection means that a surface of the grinding cylinder 110 forming the grinding outlet is in contact with a surface of the pre-loading container 310 forming the pre-loading inlet. The fixed connection can include methods like soldering, welding or heat pressing. The detachable connection may involve one or a combination of methods such as screw fastening, snap-fit, magnetic attachment, or adhesive bonding.

In FIG. 1, the grinding outlet of the grinding cylinder 110 may be offset horizontally by a certain distance from the pre-loading inlet. Furthermore, the grinding device 100 further includes a guide chute. The guide chute extends obliquely from a discharge port of the grinding cylinder 110 towards the pre-loading inlet, enabling the material from the grinding cylinder 110 to be guided into the material entering the pre-loading container 310.

Based on the above, when the material transport process, where the material is discharged from the grinding chamber, flows through the pre-loading chamber, and then enters the brewing chamber, is driven by a specifically designed driver 341, the arrangement orientation of the grinding chamber, the pre-loading chamber, and the brewing chamber is not limited. Moreover, the grinding chamber, the pre-loading chamber and the brewing chamber can be arranged in a linear, curved, or other configurations. However, when there is no specialized driver 341 to drive this transport process, the grinding chamber, the pre-loading chamber and the brewing chamber can be arranged sequentially along the vertical direction, utilizing a force of gravity to achieve passive material transport.

In practical applications, the measurement mechanism 320 can be configured as any suitable measuring device capable of accurately measuring the weight of material flowing through the pre-loading chamber.

In one embodiment, the measurement mechanism 320 may be a weighting sensor. Specifically, the weighting sensor can be a weight sensor, a pressure weighting sensor, etc. When the material flows through the pre-loading chamber, a force is applied to the weighting sensor, which senses the variation of this force to obtain the real-time weight value of the material.

In one embodiment, the measurement mechanism 320 may be a distance measuring sensor. The distance measuring sensor, for example, is a photoelectric sensor. Typically, the distance measuring sensor includes an emitting portion and a receiving portion. The emitting portion and the receiving portion can be arranged on opposite radial sides of the pre-loading chamber, respectively. When the material flows through the pre-loading chamber, it blocks the signal emitted by the emitting portion, affecting the amount of signal received by the receiving portion. The degree of blockage varies with the flow rate of the material, leading to different amounts of reception by the receiving portion. Consequently, the control device can calculate the real-time weight value of the material based on factors such as the flow rate of the material, the distance between the emitting portion and the receiving portion, and a radial cross-sectional area of the pre-loading chamber.

In one embodiment, the measurement mechanism 320 may be an imaging sensor. When the material flows through the pre-loading chamber, the imaging sensor can capture image information of the material in its conveying state at set intervals. Upon receiving the image information, the control device can calculate the real-time weight value of the material based on a preset algorithm.

It is understandable that the aforementioned embodiments of the measurement mechanism 320 do not impose limitations on the selection of solutions for its practical application. According to actual needs, the measurement mechanism 320 can be configured to include at least two types of measurement devices, such as a weighing sensor and an imaging sensor. In this case, the measurement weight values of the material obtained by the weighing sensor and the measurement weight values obtained by the imaging sensor can be comprehensively considered to ultimately achieve a more accurate real-time weight value. Additionally, through the image information captured by the imaging sensor, quality monitoring of the coffee powder dispensing, such as particle size, dispensing frequency and dispensing area, can be conducted to enhance the overall quality of the coffee machine.

In practical application, the pre-loading container 310 is designed to hold the material. This means that once the material enters the pre-loading chamber, it can be remained there for a required duration. During this stay, the measurement mechanism 320 can perform weight detection on the material within the pre-loading chamber. After the measurement mechanism 320 completes the weight measurement of the material in the pre-loading chamber, the pre-loading chamber is in communication with the brewing chamber, allowing the material to move from the pre-loading chamber into the brewing chamber. At this time, the measurement mechanism 320 includes a weighing sensor and/or an imaging sensor. Thus, the measurement mechanism 320 can be chosen to directly measure the weight of the material in the pre-loading chamber. However, more simply, it can also be selected to measure the weight of the pre-loading container 310 and/or other components capable of holding the material together, making efficient use of the required duration the material stays in the pre-loading chamber to accurately measure its weight.

Based on any of the aforementioned embodiments, to achieve a switchable connection between the pre-loading outlet of the pre-loading chamber and the brewing inlet of the brewing chamber.

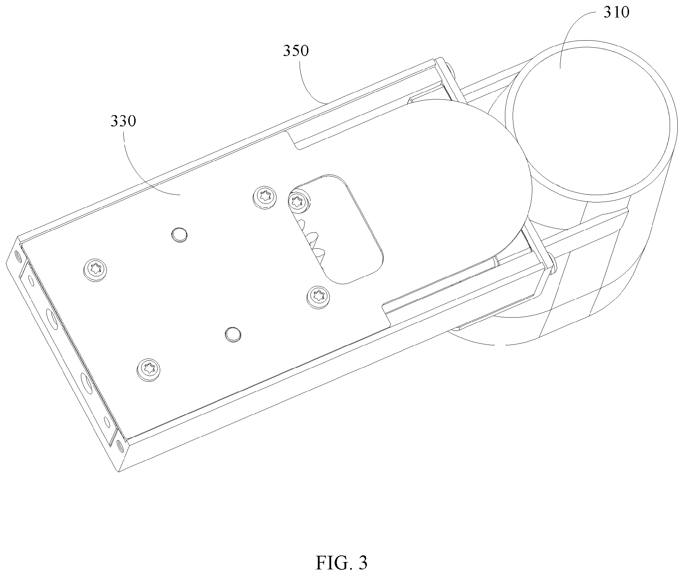

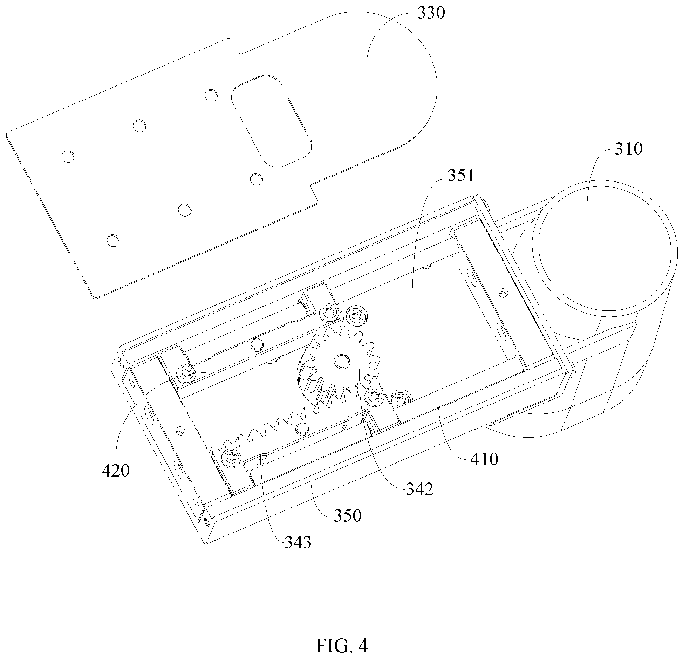

Referring to FIG. 3 and FIG. 4, in a further embodiment, the intelligent fully automatic beverage device further includes an opening-closing component 330. The opening-closing component 330 is movably installed in the pre-loading chamber, capable of assuming an open state that allows communication through the pre-loading chamber, and a closed state that blocks the pre-loading chamber. When the opening-closing component 330 is in the closed state, the measurement mechanism 320 is used to measure the weight of the material received at the opening-closing component 330.

It is understandable that the movable setting of the opening-closing component 330 can achieve the on-off control of the pre-loading chamber, thereby ensuring more precise and controllable powder quantity entering the brewing chamber. The specific manifestation of the opening-closing component 330 is not limited and can be adaptively adjusted according to the specific structure of the pre-loading chamber.

The specific structure of the opening-closing component 330 is not limited; it can be a plate-like structure, movably arranged at the pre-loading inlet and/or pre-loading outlet, and/or positioned to block at a certain chamber within the pre-loading chamber. Alternatively, the opening-closing component 330 can be spherical, similar to a ball valve, positioned to block at a certain chamber within the pre-loading chamber.

When the movable opening-closing component 330 is positioned at the pre-loading inlet and/or the pre-loading outlet, taking its placement at the pre-loading outlet as an example: when the movable opening-closing component 330 moves towards the pre-loading outlet to cover it, it is in the closed state. Conversely, when the movable opening-closing component 330 moves away from the pre-loading outlet to deviate from it, it is in the open state.

When the opening-closing component 330 is positioned at a certain chamber within the pre-loading chamber, and it moves to completely block the pre-loading inlet from the pre-loading outlet, it is in the closed state. Conversely, when the opening-closing component 330 moves to be in communication with the pre-loading inlet with the pre-loading outlet, it is in the open state.

The number of opening-closing components 330 is not limited; it can be one or at least two. When the opening-closing components 330 are set to at least two:
in one embodiment, each opening-closing component 330 can be arranged at intervals along a discharge direction of the pre-loading chamber. Each opening-closing component 330 can individually control the opening and closing of the pre-loading chamber at its respective location. When all opening-closing components 330 are in the open state, the material pre-received in the pre-loading chamber can be transferred to the brewing chamber, and/or the material ground in the grinding chamber can be transferred to the pre-loading chamber.

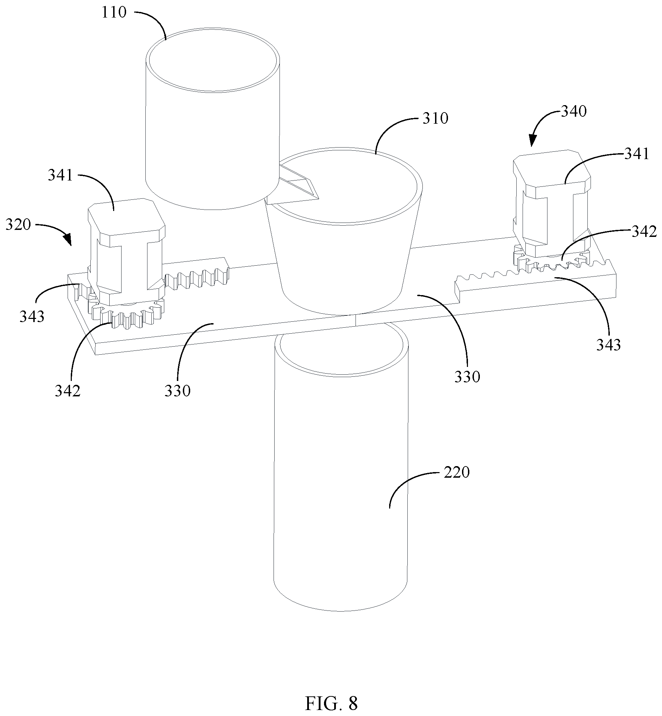

In one embodiment, each opening-closing component 330 can be positioned at a same radial cross-section of the pre-loading chamber, for example, on a same surface where the pre-loading outlet is located. As shown in FIG. 8, two opening-closing components 330 are provided, both configured in a plate-like shape. The two opening-closing components are situated on a surface of the pre-loading outlet, and are movable toward and away from each other. When the two opening-closing components 330 move closer together, they join to collectively cover the pre-loading outlet, placing it in the closed state. Conversely, when they move apart, the pre-loading outlet is exposed, transitioning to the open state.

The movement method of the opening-closing component 330 is not limited. It can be installed at one end to rotate on a radial side of the pre-loading chamber, and can drive another end to flip into the open state and the closed state. Alternatively, the opening-closing component 330 is located on the radial side of the pre-loading chamber and can move translationally in directions toward and away from the pre-loading chamber. Alternatively, the opening-closing component 330 is shaped like a cone and placed at a certain chamber of the pre-loading chamber. An inner wall of the corresponding chamber of the pre-loading chamber is designed as a conical surface that matches an outer surface of the opening-closing component 330. In this case, a direction from the pre-loading inlet to the pre-loading outlet is a discharge direction, and the opening-closing component 330 can be set to move along or against the discharge direction to reach the open state and the closed state.

Based on the above embodiments, when the opening-closing component 330 is configured to receive coffee powders discharged from the grinding chamber while in the closed state, the measurement mechanism 320 can directly measure the weight of the opening-closing component 330. By subtracting the weight of the opening-closing component 330 itself, the real-time weight value of the coffee powders it receives can be obtained. Alternatively, the measurement mechanism 320 can perform the weight measurement on the entire assembly where the opening-closing component 330 is installed, such as the grinding cylinder 110, the pre-loading container 310, or the brewing cylinder 210. After subtracting the weight of the corresponding opening-closing component 330 itself and the weights of the corresponding grinding cylinder 110, the pre-loading container 310, or the brewing cylinder 210, the real-time weight value of the coffee powders can be obtained.

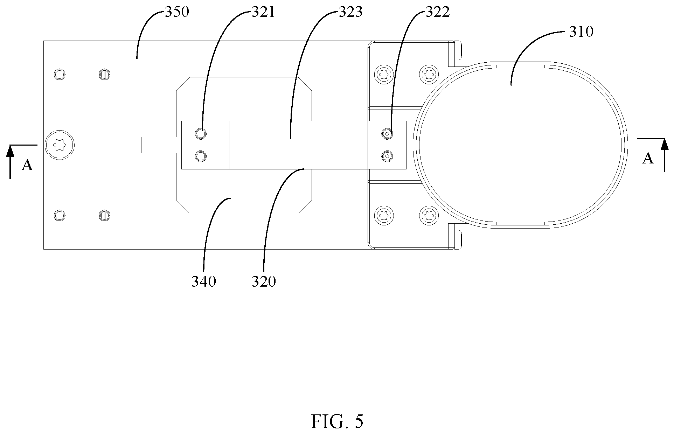

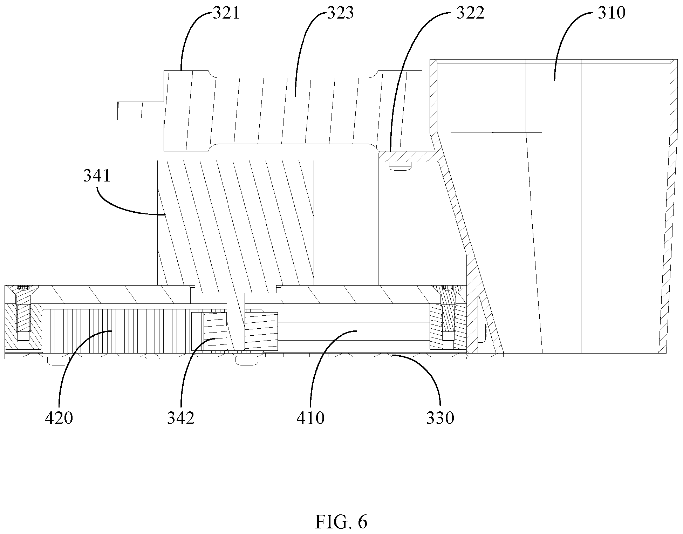

Referring to FIG. 5 and FIG. 6, in a direction of blanking, the radial cross-sectional area of the pre-loading chamber can be set uniformly or with local variations according to actual needs. In a specific embodiment, the opening-closing component 330 is movably installed in the pre-loading chamber, where it divides a feeding chamber being in communication with the grinding chamber. Specifically, when the opening-closing component 330 is movably installed within the pre-loading chamber, a portion of the pre-loading chamber that is in communication with the grinding chamber forms the feeding chamber. When the opening-closing component 330 is movably installed outside the pre-loading chamber, such as at the pre-loading outlet, the entire pre-loading chamber constitutes the feeding chamber.

A chamber in the feeding chamber that is close to the opening-closing component 330 is a first chamber. At this time, a radial cross-sectional area of the first chamber gradually increases along the direction of material discharge. In this way, the first chamber can form a spatial region with a relatively larger radial cross-sectional area in the direction toward the opening-closing component 330 along the material discharge direction. This spatial region allows for the accumulation of more coffee powders, and when the opening-closing component 330 moves from the closed state to the open state, it enables a larger flow of coffee powders to pass through. This prevents the accumulation and retention of coffee powders in the first chamber, thereby avoiding certain losses of coffee powders entering the brewing chamber and ensuring better brewing quality.

Of course, depending on actual needs, the radial cross-sectional area of the first chamber can be designed to gradually decrease along the direction of discharge, allowing a greater flow of coffee powder from the grinding chamber into the first chamber.

In one embodiment, the opening-closing component 330 is movably installed at the pre-loading chamber, where it separates the feeding chamber being communication with the grinding chamber. A chamber within the feeding chamber closest to the opening-closing component 330 is designated as a first chamber. At least an inner wall of the first chamber and a surface of the opening-closing component 330 where coffee powders are piled can be configured to be smooth. There are various specific implementations for achieving a smooth setup, such as minimizing the roughness of the target surface as much as possible or applying a fluid to the target surface that does not affect the brewing quality.

Furthermore, based on the aforementioned embodiments, in a further solution, the opening-closing component 330 can move from the closed state to the open state along the vertical direction. When the weight of the material collected at the opening-closing component 330 reaches the preset value, the opening-closing component 330 is pushed by the gravity of the material to move vertically. In this way, there is no need for an additional driver 341 to provide driving force for the movement of the opening-closing component 330, as the gravity of the material itself, which meets the preset weight, can be directly utilized. This promotes structural simplification and operational convenience, while also reducing costs. Based on this, the opening-closing component 330 can be designed as a barrier placed at the pre-loading chamber and can be flipped or translated vertically to the open state.

Alternatively, in another embodiment, the pre-loading device 300 further includes a first driving mechanism 340. The first driving mechanism 340 is electrically connected to the control device, such that under the control of the control device, the first driving mechanism 340 drives the opening-closing component 330 to switch between the open state and the closed state. The first driving mechanism 340 provides the necessary driving force for the movement of the opening-closing component 330, helping to reduce restrictions on the motion mode, structure, and connection orientation of the opening-closing component 330 and the pre-loading chamber, thereby enhancing the diversity and flexibility in the arrangement of the pre-loading chamber and the opening-closing component 330.

When two opening-closing components 330 are provided and arranged on a plane where the pre-loading outlet is located, as shown in FIG. 8, the first driving mechanisms 340 can correspondingly be set to two. The two first driving mechanisms 340 are connected with the two opening-closing components 330 in a one-to-one correspondence manner. According to actual needs, the control device can control the two first driving mechanisms 340 to start synchronously, so that the two opening-closing components 330 move simultaneously. Alternatively, the control device can control one of the two first driving mechanisms 340 to start individually, thereby driving the corresponding opening-closing component 330 to move.

When the pre-loading chamber is equipped with the opening-closing component 330 and the measurement mechanism 320 is a weighting sensor, in a further solution, the opening-closing component 330 has a first surface for stacking the collected material, and the weighting sensor is located on the first surface. In this way, when the material enters the pre-loading chamber via the grinding chamber and is stacked on the first surface, pressure can be applied to the weighting sensor located on the first surface. When a single weighting sensor is used, it can cover the entire area of the first surface. When multiple weighting sensors are used, they can be distributed across various areas of the first surface.

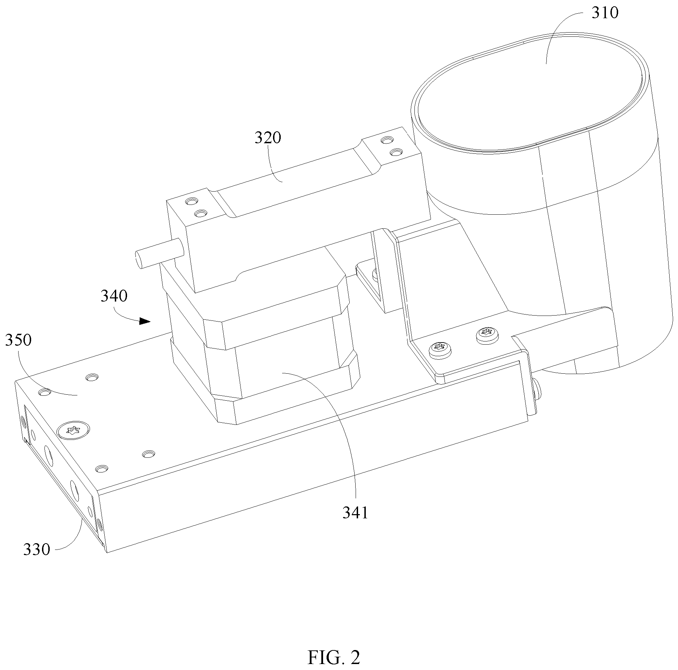

Additionally, based on any of the aforementioned embodiments, the pre-loading device 300 further includes a mounting base 350. The mounting base 350 integrates the pre-loading container 310, the opening-closing component 330, and the measurement mechanism 320 into a single unit, such that the mounting base 350, the pre-loading container 310, the opening-closing component 330, and the measurement mechanism 320 form an integrated assembly as illustrated in FIG. 2 to FIG. 7. For ease of understanding, the integrated assembly is defined as a pre-loading device 300.

The pre-loading container 310 is erected on the mounting base 350, with at least a bottom of the pre-loading container 310 exposed on the underside of the mounting base 350. As shown in FIG. 2 to FIG. 7, the pre-loading container 310 can be directly positioned on one side of the mounting base 350 and extend to its underside. A connection between the pre-loading container 310 and the mounting base 350 can be direct, or reinforced indirectly through structures such as connecting plates. Alternatively, the mounting base 350 may define a mounting hole extending from its top to its bottom, through which the pre-loading container 310 is inserted and secured, ensuring that the bottom of the pre-loading container 310 is exposed at the underside of the mounting base 350.

The opening-closing component 330 is movably connected to a bottom side of the mounting base 350, allowing it to move toward the bottom of the pre-loading container 310 to achieve the closed state and away from the bottom of the pre-loading container 310 to achieve the open state. Specifically, the mounting base 350 may define a mounting groove 351 recessed at the bottom. A wall of the mounting groove 351 is provided with a guide groove (or a guide rail) extending along a first direction that approaches and moves away from the pre-loading container 310. Correspondingly, the opening-closing component 330 is plate-shaped and covers an opening of the mounting groove 351, with a guide rail (or a guide groove) provided at the location corresponding to the guide groove (or the guide rail). The sliding connection between the guide rail and the guide groove ensures that the movement of the opening-closing component 330 along the first direction, both toward and away from the pre-loading container 310, is smoother. Of course, the sliding connection between the guide rail and guide groove can also be replaced by a rolling connection between a roller and a guide groove, with no restrictions imposed.

Based on this, the measurement mechanism 320 includes a weighing sensor. The weighing sensor has a mounting portion 321 and a measuring portion 322. The mounting portion 321 is fixedly connected to the device body. The mounting base 350, the pre-loading container 310, and the opening-closing component 330 are collectively suspended from the measuring portion 322. In this way, when the pre-loading device 300 is installed on the device body, that is, when the mounting portion 321 is fixedly connected to the device body, the mounting base 350, the pre-loading container 310 and the opening-closing component 330 are in a suspended state. When the material enters the pre-loading chamber and accumulates on the first surface of the opening-closing component 330, the measuring portion 322 can measure the total weight value of the mounting base 350, the pre-loading container 310, the opening-closing component 330, and the material. Then, by subtracting the inherent weight values of the mounting base 350, the pre-loading container 310 and the opening-closing component 330, the real-time weight value of the material is obtained.

When the weighting sensor is directly configured as a sensing component such as a strain gauge, a part of the strain gauge that is subjected to force and capable of generating sensing signals during the force application constitutes the aforementioned measuring portion 322. A remaining part of the strain gauge, other than the measuring portion 322, can wholly or partially form the mounting portion 321.

Of course, when the weighing sensor integrates sensing components such as a strain gauge, a data transmission device, etc., and is housed and installed by a casing structure to form a complete product, the sensing components collectively or partially constitute the measuring portion 322, while the casing as a whole or partially forms the mounting portion 321.

Furthermore, taking FIG. 2, FIG. 5 and FIG. 6 as an example, the casing can specifically manifest as a cantilever 323 that connects the mounting portion 321 and the measuring portion 322. The mounting portion 321 and the measuring portion 322 can be positioned at any location on the cantilever 323. Preferably, a fixed plate is arranged above the cantilever 323. The mounting portion 321 of the cantilever 323 is fixed upward beneath the fixed plate. At this point, multiple installation holes are provided on the cantilever 323. The entire cantilever 323 can be connected to the fixed plate through these installation holes, with each installation hole correspondingly forming the aforementioned mounting portion 321. The upper and lower sides of the cantilever 323 are recessed inward, forming an "I"-shaped structure that is wider at both ends and narrower in the middle. Sensing components such as stress gauges are attached to a surface of the cantilever 323, and then sealed with solid adhesive under vacuum to constitute the measuring portion 322. The mounting base 350 is fixed and suspended below the measuring portion 322. The opening-closing component 330 is movably arranged at a bottom side of the mounting base 350. The pre-loading container 310 is fixed at one end of the mounting base 350 in the horizontal direction and extends to connect to one end of the cantilever 323. Moreover, the pre-loading container 310 is positioned corresponding to the measuring portion 322, so that when receiving the material, it can apply stress to the measuring portion 322.

Furthermore, with reference to FIG. 4, in one embodiment, when the pre-loading device 300 further includes the first driving mechanism 340 as described above, the first driving mechanism 340 is electrically connected to the control device. The first driving mechanism 340 includes a driver 341, a driving gear 342, and a translational rack 343. The driver 341 is mounted on the mounting base 350 and has a rotational output shaft extending in the vertical direction. The driving gear 342 is mounted on the rotational output shaft to be driven to rotate. The translational rack 343 extends in directions toward and away from the pre-loading container 310 (i.e., the aforementioned first direction) and is movably arranged. The translational rack 343 is connected to the opening-closing component 330. The translational rack 343 meshes with the driving gear 342. The driver 341 can specifically be configured as, for example, a motor. The motor can be installed at any position on the mounting base 350, such as exposed on a top of the mounting base 350 or housed within a mounting groove 351. The rotational output shaft of the motor rotates, driving the driving gear 342 to rotate in a same direction. Through the meshing of the driving gear 342 and the translational rack 343, the translational rack 343 is driven to move along the first direction, simultaneously driving the opening-closing component 330 to move along the first direction, thereby achieving the purpose of switching between the open state and the closed state.

In a further embodiment, the intelligent fully automatic beverage device further includes a guide rod 410 and a guide block 420. The guide rod 410 extends along the first direction and is disposed in the mounting groove 351. The guide block 420 defines a guide hole that extends through the guide block 420 along the first direction, and the guide hole is slidably connected and matched with the guide rod 410. The guide block 420 is fixedly connected to the opening-closing component 330, or the guide block 420 is fixedly connected to the translational rack 343, thereby providing good guidance for the movement of the opening-closing component 330 during the process where the translational rack 343 drives the opening-closing component 330 to move along the first direction.

The guide block 420 and the guide rod 410 can be configured in a set or at least two sets according to actual needs. When two sets of guide blocks 420 and guide rods 410 are configured, they can be spaced apart, and by extending the translational rack 343 through the guide hole in the first direction, the translational rack 343 can be reused for one of the guide blocks 420.

When two opening-closing components 330 are provided and arranged on the plane where the pre-loading outlet is located, as shown in FIG. 8, the first driving mechanisms 340 can correspondingly be set to two. The two first driving mechanisms 340 are connected with the two opening-closing components 330 in a one-to-one correspondence manner. In this case, each driving mechanism can similarly include the aforementioned driver 341, the driving gear 342, and the translational rack 343. The translational rack 343 is either fixedly connected to or integrally processed with the corresponding opening-closing component 330. In practical application, if the control device controls the rotational output shafts of the two drivers 341 to rotate in the same direction, the two translating gears can be positioned on different sides of the two driving gears 342, ensuring that the translating directions of the two translating gears are opposite.

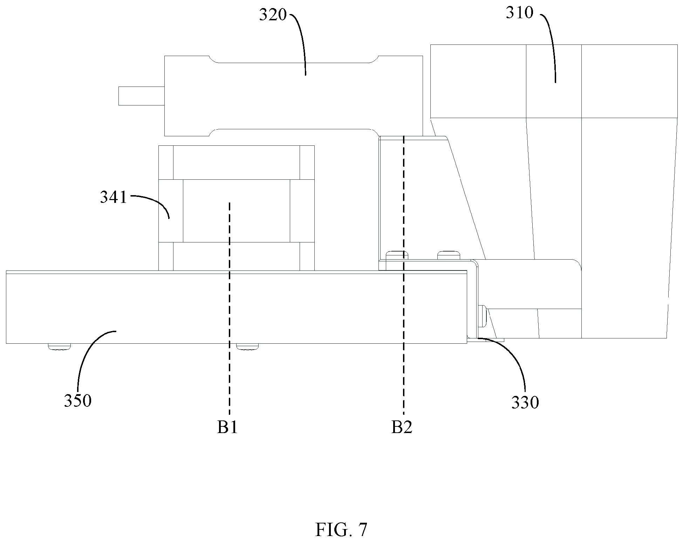

According to an optimal embodiment of the present invention, referring to FIG. 7, the measurement mechanism 320 is symmetrically distributed as a whole. The mounting portion 321 is fixed to the device body as a fulcrum. A point where the measuring portion 322 connects to the mounting base 350 serves as a force application point. When the measuring portion 322 is subjected to force, the cantilever 323 undergoes elastic deformation, triggering the internal weighting sensor to detect the amount of elastic deformation, thereby calculating the weight of the material. The driver 341 is positioned below the measuring portion 322, ensuring that the overall center of gravity of the pre-loading device 300 is as close as possible to the force application point. Specifically, if an axis of the rotational output shaft of the driver 341 is B1, and an axis of the measuring portion 322 of the measurement mechanism 320 in a same direction is B2, an overall layout of the pre-loading device 300 can be improved to position the overall center of gravity of the pre-loading device 300 as much as possible between B1 and B2.

To further reduce the margin of error in weighing, the pre-loading container 310 can be fixed solely to the measuring portion 322 of the measurement mechanism 320, thereby reducing the self-weight of the measurement mechanism 320.

Furthermore, based on any of the aforementioned embodiments, it is also intended to achieve a switchable connection between the pre-loading outlet of the pre-loading chamber and the brewing inlet of the brewing chamber.

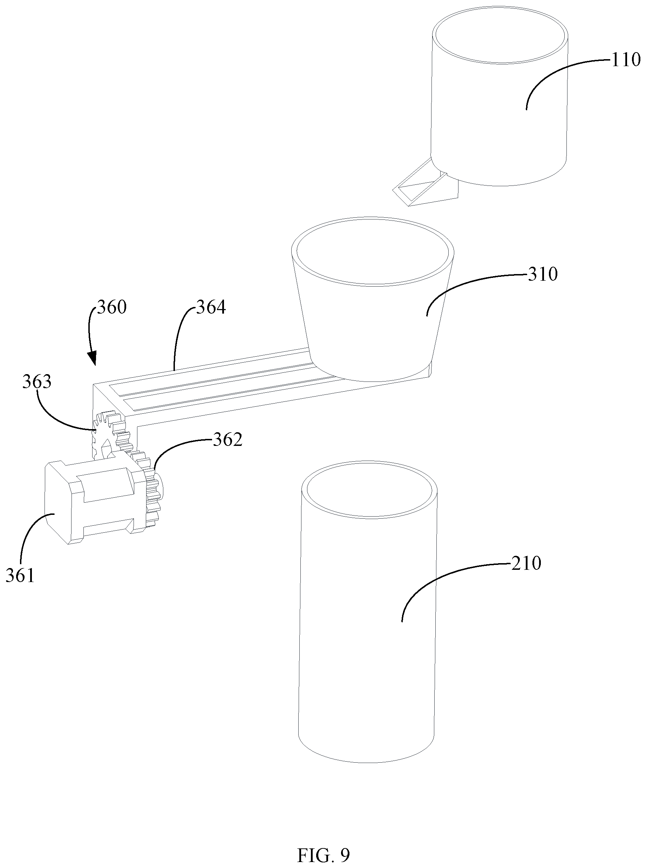

Referring to FIG. 9, in one embodiment, the pre-loading container 310 defines a pre-loading opening that communicates with the pre-loading chamber, and the brewing cylinder 210 defines a brewing inlet that communicates with the brewing chamber. The pre-loading container 310 is pivotally arranged relative to the device body, enabling it to be in a discharge state where the pre-loading opening faces the brewing inlet, and a pre-loading state where the pre-loading opening is offset from the brewing inlet.

Specifically, when the control device initiates the operation of the grinding mechanism 120, it controls the pre-loading container 310 to pivot so that the pre-loading opening is in communication with the grinding outlet. At this point, the pre-loading opening effectively serves as the aforementioned pre-loading inlet, allowing the material discharged from the grinding outlet to enter the pre-loading chamber. When the measurement mechanism 320 determines that the weight of the material in the pre-loading chamber reaches the preset value, the control device then controls the pre-loading container 310 to pivot back, aligning the pre-loading opening with the brewing inlet. At this time, the pre-loading opening functions as the pre-loading outlet, transferring the pre-loaded material from the pre-loading chamber into the brewing chamber via the brewing inlet.

Similarly, the driving force required for the flipping activity of the pre-loading container 310 can be manually driven by the user or automatically driven by the gravitational effect when the material reaches the preset weight value. Alternatively, in one embodiment, the pre-loading device 300 further includes a second driving mechanism 360. The second driving mechanism 360 is electrically connected to the control device to drive the pre-loading container 310 to switch between the discharging state and the pre-loading state under the control of the control device. The specific composition of the second driving mechanism 360 is not limited and may include, but is not limited to, the driver 341 such as a motor, or a combination of the driver 341, such as a motor and a linear cylinder, along with a transmission component. The transmission component can be, but is not limited to, a gear set, a screw-nut mechanism, etc.

As specifically shown in FIG. 9, the second driving mechanism 360 may specifically include a first motor 361, a first gear 362, a second gear 363, and a support arm 364. The pre-loading container 310 has a first end and a second end. The first end of the pre-loading container 310 defines the aforementioned pre-loading opening. The support arm 364 extends approximately horizontally. One end of the support arm 364 is connected to the second end of the pre-loading container 310, and another end of the support arm 364 is connected to the shaft end of the second gear 363. The first gear 362 is connected to the rotating output shaft of the first motor 361, and the first gear 362 meshes with the second gear 363. In this way, when the first motor 361 starts and drives the first gear 362 to rotate around a horizontal axis, it sequentially drives the second gear 363 to rotate in an opposite direction, drives the support arm 364 to rotate, and ultimately causes the pre-loading container 310 to flip, enabling the pre-loading opening to move and switch between facing upwardly to be in communication with the grinding chamber, and facing downwardly to be in communication with the brewing chamber.

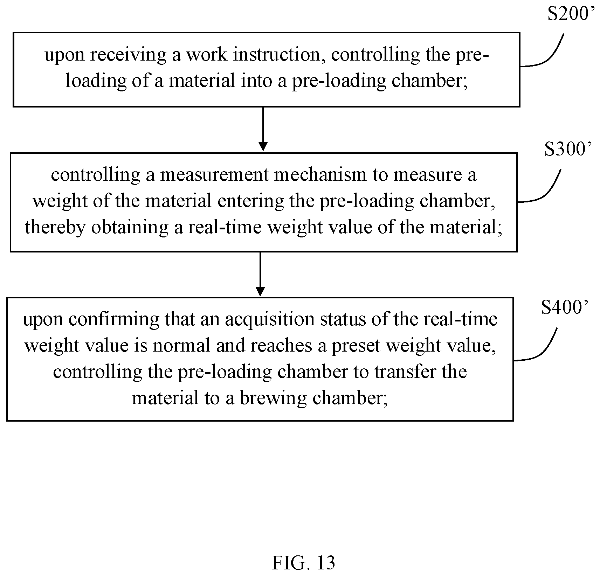

Furthermore, referring to FIG. 13, based on any of the aforementioned embodiments related to the intelligent fully automatic beverage device, the present invention further provides a control method for the intelligent fully automatic beverage device, including:
step S200': upon receiving a work instruction, controlling the pre-loading of the material into the pre-loading chamber;
step S300': controlling the measurement mechanism 320 to measure the weight of the material entering the pre-loading chamber, thereby obtaining the real-time weight value of the material; and
step S400': upon confirming that the acquisition status of the real-time weight value is normal and reaches the preset weight value, controlling the pre-loading chamber to transfer the material to the brewing chamber.

In this embodiment, the work instruction can be manually triggered by the user or periodically triggered by the control device according to preset settings. The method of manual triggering by the user is not limited; it can be triggered by pressing physical and/or virtual buttons located on an outer surface of the device, or through a mobile terminal wirelessly connected to the control device, or, if the device is additionally equipped with a voice recognition module or an image recognition module, by outputting a set voice or performing a set action, among other possibilities, without limitation.

Taking the intelligent fully automatic beverage device, which includes the grinding device 100, as an example, the above steps can be specifically manifested as follows:
step S200: upon receiving a work instruction, controlling the grinding mechanism 120 to start operation, so as to pre-deliver the material into the pre-loading chamber;
step S300: controlling the measurement mechanism 320 to perform weight measurement on the material entering the pre-loading chamber, and obtaining the real-time weight value of the material; and
step S400: upon confirming that the acquisition status of the real-time weight value is normal and reaches the preset weight value, controlling the pre-loading chamber to transfer the material to the brewing chamber.

After the work instruction is triggered, the control device initiates the operation of the grinding device 100. This includes the feeding mechanism within the grinding device 100 retrieving and transferring coffee beans into the grinding chamber, the grinding mechanism 120 grinding the beans to the desired degree, and the discharging mechanism of the grinding device 100 transferring the ground coffee powder out from the grinding chamber.

The measurement mechanism 320 can perform the real-time measurement on material passing through the pre-loading chamber in real time, as well as on the material stacked on, for example, the first surface of the opening-closing component 330. The measurement result at least includes the real-time weight value of the material.

Since the grinding device 100 remains in operation, the coffee powders continuously enter the pre-loading chamber and, for example, gradually accumulate on the first surface of the opening-closing component 330, causing the real-time weight value of the material to increase progressively and gradually approach the preset weight value. During this process, by monitoring the measurement status of the real-time weight value of the material by the measurement mechanism 320, it can be largely determined whether the current acquisition status of the real-time weight value is normal. When the acquisition status of the real-time weight value is normal and reaches the preset weight value, it essentially indicates that the quantity and quality of the coffee powders have met the requirements, allowing the grinding device 100 to be controlled to stop operation. When the opening-closing component 330 is present, it can be operated to move to the open state, allowing the coffee powders to enter the brewing chamber. The control device then initiates the brewing mechanism 220 to operate until the desired coffee beverage is obtained.

Furthermore, after the step S300: controlling the measurement mechanism 320 to perform weight measurement on the material entering the pre-loading chamber, and obtaining the real-time weight value of the material, the following steps are also included:
step S310: when it is determined that the acquisition status of the real-time weight value is abnormal, controlling the grinding device 100 to stop operating;
step S320: obtaining the abnormal type of the material and, based on the abnormal type, determining an adjustment plan associated with the abnormal type;
step S330: controlling the grinding device 100 to execute adjustment actions according to the adjustment plan.

In the present embodiment, when the control device determines that the acquisition status of the material's real-time weight value is abnormal, it indicates that the current coffee powder quality cannot meet the target requirements. At this point, the control device first commands the grinding device 100 to stop operating, halting further powder output, and then identifies the type of abnormality in the material. The type of abnormality in the material is generally related to the weight detection process performed by the measurement mechanism 320, such as the powder output speed being too fast or too slow, the powder being too coarse, or the powder output direction being off-target.

The control device pre-maps each type of anomaly with its corresponding adjustment plan, forming a database. For instance, when an anomaly such as excessively fast powder discharge speed occurs, adjustments may primarily target the wear level of the cutting tools in the grinding mechanism 120. In practical application, when the control device identifies the current type of anomaly, it queries and compares this anomaly type with the data stored in the database to determine an associated adjustment plan. The adjustment plan is expressed in a form recognizable by the control device or the grinding device 100, such as commands, thereby enabling the grinding device 100 to execute the relevant adjustment actions according to the plan.

Besides, in one embodiment, before the aforementioned step S200: upon receiving a work instruction, controlling the grinding mechanism 120 to start operation, so as to pre-deliver the material into the pre-loading chamber, it further includes:
step S110: executing a verification operation upon receiving a verification instruction, wherein the verification operation comprises:
step S111: controlling the grinding device 100 to start operation to grind the material entering the grinding chamber;
step S112: controlling the measurement mechanism 320 to measure the weight of the material passing through the pre-loading chamber, and obtaining a first verification weight value of the material;
step S113: upon determining that the first verification weight value reaches a preset weight value, controlling the grinding device 100 to stop operation and acquiring the operating time of the grinding device 100; and
step S114: when the operating time differs from a preset time threshold, acquiring the operation parameters of the grinding device 100 and adjusting the operation parameters according to preset rules.

In the present embodiment, the verification instruction can be generated manually by the user, similar to the aforementioned work instruction, or triggered periodically by the control device according to preset settings. The verification instruction is associated with a verification operation. The steps S111 to S112 of the verification process can be executed by referring to the aforementioned steps S200 to S300. When the obtained first verification weight value gradually increases and reaches the preset weight value, the grinding device 100 is controlled to stop operating, and the operating time of the grinding device 100 since the step S111 is obtained through methods such as timestamping. If the operating time differs from the preset time threshold, that is, if it is greater than or less than the preset time threshold, reaching the required powder weight too quickly or too slowly may indicate that the current operating parameters of the grinding device 100 may be abnormal. For example, the blades in the grinding mechanism 120 may have significant wear, causing coffee beans to be discharged into the pre-loading chamber without being fully ground.

Similarly, the control device pre-maps each abnormal operating parameter with its corresponding adjustment rule, forming a database. When the control device identifies an abnormality in the current operating parameters of the grinding device 100, it compares the abnormality with the data stored in the database through one-to-one querying to determine the associated adjustment rule. This then allows the grinding device 100 to execute relevant adjustment actions based on that rule.

In the present embodiment, after each verification operation is completed, the control device repeats a second verification operation, that is, repeats the steps S111 to S114, until the operating time reaches the time threshold. This indicates that the operating parameters of the grinding device 100 have been properly adjusted, thereby ending the automatic verification function of the coffee machine.

Furthermore, the control device can collect and statistically analyze the weight values of coffee powders for each beverage every time a work instruction is triggered and after completing the steps S200 to S400. This facilitates the creation of visual data, allowing users to review and understand the consumption of coffee beans.

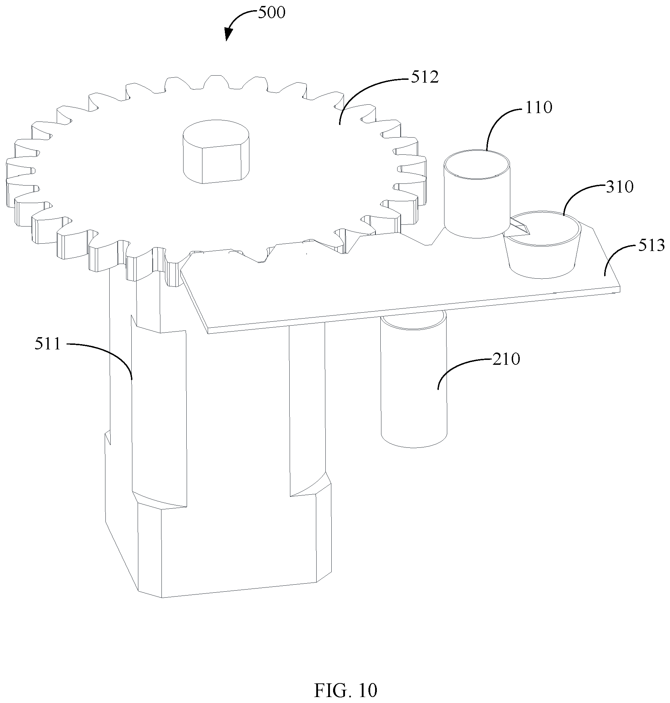

Furthermore, referring to FIG. 10 to FIG. 12, the present invention further discloses an intelligent fully automatic beverage device, including a device body, a brewing device 200, and a pre-loading device 300. The brewing device 200 is arranged on the device body. The brewing device 200 includes a brewing cylinder 210 forming a brewing chamber, and a brewing mechanism 220 for extracting and brewing the material within the brewing chamber. The pre-loading device 300 is arranged on the device body. The pre-loading device 300 includes a pre-loading container 310 forming a pre-loading chamber, and a measurement mechanism 320 for weighing the material entering the pre-loading chamber. At least one of the brewing cylinder 210 and the pre-loading container 310 is movably arranged relative to the device body, enabling movements towards and away from each other. Moreover, when the brewing cylinder 210 and the pre-loading container 310 move towards each other to a preset position, the pre-loading chamber and the brewing chamber are connected and in communication with each other.

The specific configurations of the device body, the brewing device 200, the pre-loading device 300, etc., can be referred to the above descriptions without further elaboration. By making at least one of the brewing cylinder 210 and the pre-loading container 310 movable, the connection between the brewing chamber and the pre-loading chamber can be switched between connected and disconnected states. Typically, the device body is spaced apart with a powder receiving position and a brewing position. The grinding device 100 is arranged adjacent to the powder receiving position, and the brewing mechanism 220 is arranged adjacent to the brewing position.

Regarding the relative movement between the brewing cylinder 210 and the pre-loading container 310:
in one embodiment, the brewing cylinder 210 may be fixed relative to the device body, with the pre-loading container 310 positioned between the grinding cylinder 110 and the brewing cylinder 210, and arranged to be movable in directions toward and away from the brewing cylinder 210.

Of course, the present invention does not impose any restrictions on the specific movement methods or trajectory forms of the pre-loading container 310. Depending on actual needs, the pre-loading container 310 can perform linear or curved translational motion in any suitable direction, or rotational motion around any suitable axis.

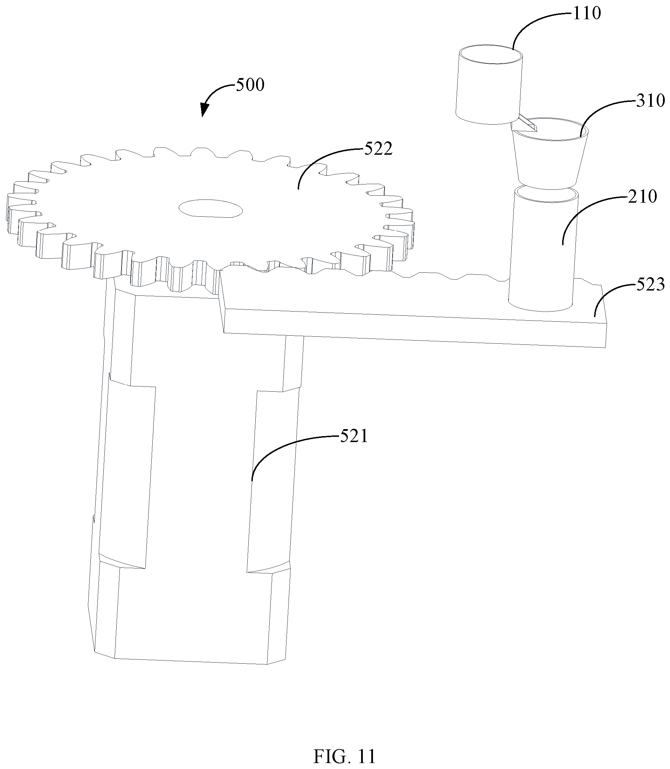

Specifically, as shown in FIG. 11, the grinding cylinder 110 and the brewing chamber can be arranged offset along the first horizontal direction. Correspondingly, the pre-loading container 310 can be set to perform linear translation along the first horizontal direction. At this time, the translational movement of the pre-loading container 310 can be driven by a third driving mechanism 500. The third driving mechanism 500 may include a second motor 511, a third gear 512, and a first rack 513. A rotational output shaft of the second motor 511 extends in the vertical direction. The third gear 512 is coaxially mounted with the rotational output shaft of the second motor 511. The first rack 513 extends along the first horizontal direction and is movable in translation along that direction. The first rack 513 meshes with the third gear 512. The first rack 513 is fixedly connected to the pre-loading container 310. Thus, when the second motor 511 is started and runs, it drives the third gear 512 to rotate, which in turn, through the meshing between the third gear 512 and the first rack 513, drives the first rack 513 and the pre-loading container 310 to translate synchronously along the first horizontal direction, enabling them to switch back and forth between directly below the grinding cylinder 110 and directly above the brewing cylinder 210.

Alternatively, in one embodiment, the brewing cylinder 210 is fixed relative to the device body, the pre-loading container 310 is positioned between the grinding cylinder 110 and the brewing cylinder 210, and is arranged to be movable in directions approaching and moving away from the brewing cylinder 210.

Similarly, the present invention does not impose any restrictions on the specific movement method or trajectory of the brewing cylinder 210. Depending on practical needs, the brewing cylinder 210 can perform linear or curved translational motion in any suitable direction, or rotational motion around any suitable axis.

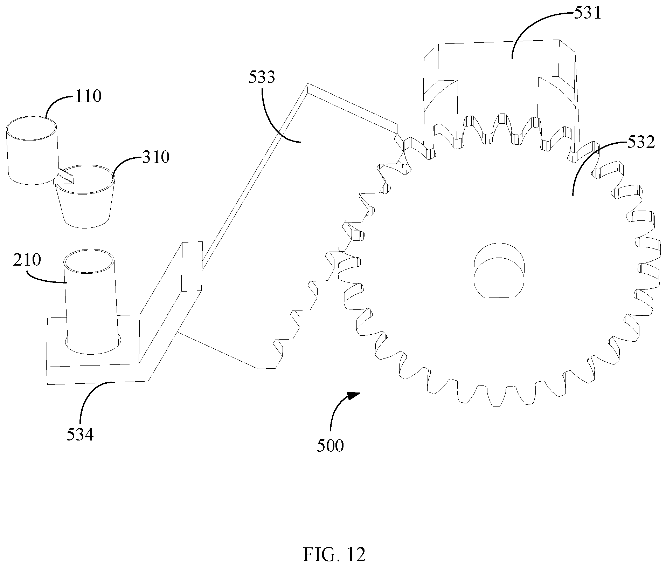

As specifically illustrated in FIG. 12, the brewing cylinder 210 can be configured to translate linearly along the second horizontal direction. In this case, the translational movement of the brewing cylinder 210 can also be driven by a third driving mechanism 500. The third driving mechanism 500 may include a third motor 521, a fourth gear 522, and a second rack 523. A rotational output shaft of the third motor 521 extends in the vertical direction. The fourth gear 522 is coaxially mounted with the rotational output shaft of the third motor 521. The second rack 523 extends along the second horizontal direction and is movable in translation along that direction. The second rack 523 meshes with the fourth gear 522 and is fixedly connected to the brewing cylinder 210. Thus, when the third motor 521 is activated, it drives the fourth gear 522 to rotate, which in turn, through the meshing between the fourth gear 522 and the second rack 523, drives the second rack 523 and the brewing cylinder 210 to translate synchronously along the second horizontal direction, enabling them to switch back and forth between directly below the pre-loading container 310 and beside the pre-loading container 310.

Alternatively, as specifically illustrated in FIG. 13, the brewing cylinder 210 can be configured to translate linearly along a first oblique direction. The first oblique direction is inclined relative to the horizontal or vertical direction. In this case, the translational movement of the brewing cylinder 210 can also be driven by a third driving mechanism 500. The third driving mechanism 500 may include a fourth motor 531, a fifth gear 532, and a third rack 533. A rotational output shaft of the fourth motor 531 extends in the horizontal direction. The fifth gear 532 is coaxially mounted with the rotational output shaft of the fourth motor 531. The third rack 533 extends along the first oblique direction and is movable translationally along it. The third rack 533 meshes with the fifth gear 532 and is fixedly connected to the brewing cylinder 210. Thus, when the fourth motor 531 is activated, it drives the fifth gear 532 to rotate, which in turn, through the meshing between the fifth gear 532 and the third rack 533, drives the third rack 533 and the brewing cylinder 210 to translate synchronously along the first oblique direction, enabling them to switch back and forth between directly below the pre-loading container 310 and obliquely above/below the pre-loading container 310.

In FIG. 13, the brewing cylinder 210 can be directly connected to the third rack 533, or the third driving mechanism 500 may also include a connecting component 534. The connecting component 534 includes a horizontally extending section and an inclined section. The horizontally extending section is provided for the fixed installation of the brewing cylinder 210. The inclined section extends along the aforementioned first inclination direction and is fixedly connected to the third rack 533.

Furthermore, in another embodiment, both the brewing cylinder 210 and the pre-loading container 310 are movably arranged relative to the device body, and they can move towards each other and away from each other respectively. For details, reference can be made to the above description without repeating each point.

Furthermore, the intelligent fully automatic beverage device further includes the grinding device 100 as described above. After coffee beans enter the grinding device 100 for grinding, the coffee powders are discharged from the grinding device 100 into the brewing cylinder 210 of the measurement mechanism 320 for containment. The brewing chamber of the brewing mechanism 220 is designed to move between the powder receiving position and the brewing position. In existing fully automatic coffee machines, when the grinding device 100 grinds beans, the brewing mechanism 220 needs to move to the powder receiving position to wait for the grinding device 100 to discharge coffee powders, then move to the brewing position to extract the coffee powders in the cylinder. After extraction, it moves back to the powder receiving position to wait for the grinding device 100 to grind beans again, leading to inefficient brewing due to this repetitive process. When multiple beverages are queued for preparation, by adding the measurement mechanism 320, while the brewing mechanism 220 is extracting coffee, the grinding device 100 can start grinding coffee beans and discharge the coffee powders into the brewing cylinder 210 of the measurement mechanism 320, which allows grinding and brewing to occur simultaneously, and improves the work efficiency by over 30%.

Additionally, referring to FIG. 1, the present invention further provides an intelligent fully automatic beverage device, including a brewing device 200 and a pre-loading device 300. The brewing device 200 includes a mounting plate 230, a brewing cylinder 210, and a brewing mechanism 220 disposed on the mounting plate 230. The brewing cylinder 210 forms a brewing chamber, and the brewing mechanism 220 is used to extract and brew the material within the brewing chamber. The pre-loading device 300 includes a pre-loading container 310 forming a pre-loading chamber, and a measurement mechanism 320 for weighing the material entering the pre-loading chamber. The mounting plate 230 extends in a horizontal direction. The pre-loading container 310 is installed through the mounting plate 230. Moreover, at least one end of the pre-loading container 310 in the vertical direction protrudes beyond a corresponding end surface of the mounting plate 230.

Thus, projections of the grinding device 100, the measurement mechanism 320, and the brewing device 200 in the vertical direction at least partially overlap to minimize an overall height of the machine. The brewing mechanism 220 of the brewing device 200 is fixed to the mounting plate 230. The mounting plate 230 can be independently installed and fixed to any component of the device body or within the device body. Of course, the mounting plate 230 can also be an integrated extension structure of the device body, the grinding device 100, or any component within the device body.

In the embodiment of the present invention, the mounting plate 230 has a first surface and a second surface which are disposed opposite to each other in the vertical direction. The first surface is located above the second surface. The brewing mechanism 220 is at least partially mounted on the first surface. The brewing cylinder 210 is installed below the second surface. In light of the above, the brewing mechanism 220 includes, but is not limited to, a drive motor, a transmission mechanism, etc. The brewing cylinder 210 is positioned below the mounting plate 230. The brewing cylinder 210 is movably arranged beneath the mounting plate 230. Simultaneously, a rotating shaft extends upwardly through the mounting plate 230 to connect with the brewing mechanism 220 above it, allowing the brewing cylinder 210 to switch directly between the powder receiving position and the brewing position. The second surface of the mounting plate 230, opposite to the first surface, is equipped with a downward-extending residue scraper. This scraper can remove coffee powders that are pushed upwardly from inside the brewing cylinder 210 when it moves from the brewing position to the powder receiving position.

When the brewing cylinder 210 is in the powder receiving position, it is positioned below the pre-loading container 310. An upper end of the brewing cylinder 210 extends upwardly beyond the first surface of the mounting plate 230, while its lower end extends downwardly beyond the second surface of the mounting plate 230.

In the second embodiment of the present invention, the upper surface of the pre-loading container 310 is positioned lower than the first surface of the mounting plate 230.

In the third embodiment of the present invention, the lower end of the pre-loading container 310 is positioned higher than the second surface of the mounting plate 230.

Based on the descriptions in the above multiple embodiments, the brewing cylinder 210 needs to be positioned below the pre-loading container 310, allowing the residue scraper to be installed at a bottom of the pre-loading container 310 or integrally formed with the bottom of the pre-loading container 310.

An inner diameter at a top of the brewing cylinder 210 is greater than an inner diameter at a bottom of the pre-loading container 310.

The above description is only a preferred embodiment of the present invention and does not limit the patent scope of the present invention. Any equivalent structural modifications made under the inventive concept of the present invention, using the content of the specification and drawings, or direct/indirect application in other related technical fields, are included within the scope of patent protection for the present invention.

## Claims

1. An intelligent fully automatic beverage device, **characterized by** comprising:
a device body;
a brewing device disposed on the device body, the brewing device comprising a brewing cylinder forming a brewing chamber;
a pre-loading device disposed on the device body, the pre-loading device comprising a pre-loading container forming a pre-loading chamber, and a measurement mechanism configured to measure a weight of a material entering the pre-loading chamber; and
a control device connected to the measurement mechanism, the control device controlling to pre-deliver the material into the pre-loading chamber, and when determining that a material weight value measured by the measurement mechanism reaches a preset weight value, controlling the pre-loading chamber to transfer the material to the brewing chamber.

2. The intelligent fully automatic beverage device according to claim 1, wherein the pre-loading container is configured to bear material, and after the measurement mechanism completes a weight measurement of the material in the pre-loading chamber, the pre-loading chamber is in communication with the brewing chamber to allow the material to enter the brewing chamber from the pre-loading chamber; and
the measurement mechanism comprises a weighing sensor and/or an imaging sensor.

3. The intelligent fully automatic beverage device according to claim 1, further comprising an opening-closing component, the opening-closing component being movably installed on the pre-loading container to have an open state being in communication with the pre-loading chamber and the brewing chamber, and a closed state separating the pre-loading chamber and the brewing chamber;
when the opening-closing component is in the closed state, the measurement mechanism is configured to perform a weight measurement on the material within the pre-loading chamber.

4. The intelligent fully automatic beverage device according to claim 3, wherein the pre-loading chamber is provided with a pre-loading inlet and a pre-loading outlet; the pre-loading outlet is configured to be in communication with the brewing chamber; the opening-closing component is movably disposed at the pre-loading outlet; and the opening-closing component is in the closed state when covering the pre-loading outlet, and is in the open state when opening the pre-loading outlet;
when in the closed state, the opening-closing component is configured to receive the material entering the pre-loading chamber, and the measurement mechanism is configured to perform the weight measurement on the material received by the opening-closing component.

5. The intelligent fully automatic beverage device according to claim 4, wherein the opening-closing component is movable from the closed state to the open state along a vertical direction, so that when a weight value of the material collected at the opening-closing component reaches the preset weight value, the opening-closing component is pushed by a gravity of the material to move along the vertical direction; or
the pre-loading device further comprises a first driving mechanism; and the first driving mechanism is electrically connected to the control device, so that under a control of the control device, the first driving mechanism drives the opening-closing component to switch between the open state and the closed state.

6. The intelligent fully automatic beverage device according to claim 4, wherein the pre-loading device further comprises a mounting base; the mounting base connects the pre-loading container, the opening-closing component, and the measurement mechanism into an integrated unit; the pre-loading container extends through the mounting base; the pre-loading outlet is provided at a bottom side of the pre-loading container; the opening-closing component is movably connected to the mounting base located beside the pre-loading outlet, so as to be translatable towards a direction close to the pre-loading outlet to the closed state, and translatable towards a direction away from the pre-loading outlet to the open state;
the measurement mechanism comprises a weighing sensor which has a mounting portion and a measuring portion; and the mounting base, the pre-loading container and the opening-closing component are collectively suspended on the measuring portion.

7. The intelligent fully automatic beverage device according to claim 6, wherein the pre-loading device further comprises a first driving mechanism, and the first driving mechanism comprises:
a driver, disposed on the mounting base and electrically connected to the control device, the driver having a rotary output shaft;
a driving gear, mounted on the rotary output shaft to be driven to rotate; and
a translational rack, extending in a direction towards and away from the pre-loading container, and movably disposed relative to the mounting base; the translational rack being connected to the opening-closing component; and the translational rack meshing with the driving gear.

8. The intelligent fully automatic beverage device according to claim 1, wherein the pre-loading container is provided with a pre-loading opening communicating with the pre-loading chamber, and the brewing cylinder is provided with a brewing inlet communicating with the brewing chamber;
the pre-loading container is rotatably disposed relative to the device body, to have a discharging state rotated to make the pre-loading opening face the brewing inlet, and a pre-loading state rotated to make the pre-loading opening misaligned with the brewing inlet.

9. The intelligent fully automatic beverage device according to claim 8, wherein the pre-loading device further comprises a second driving mechanism; and the second driving mechanism is electrically connected to the control device, to drive the pre-loading container to switch between the discharging state and the pre-loading state under a control of the control device.

10. The intelligent fully automatic beverage device according to any one of claims 1 to 9, further comprising a grinding device disposed on the device body; the grinding device comprising a grinding cylinder forming a grinding chamber, and a grinding mechanism for grinding the material within the grinding chamber;
the control device is electrically connected to the grinding mechanism, the control device controls the grinding mechanism to start operating to pre-deliver the material into the pre-loading chamber, and when determining that the material weight value measured by the measurement mechanism reaches the preset weight value, controls the grinding mechanism to stop operating.

11. A control method for an intelligent fully automatic beverage device according to any one of claims 1 to 10, comprising:
when receiving a work instruction, controlling to pre-deliver the material into the pre-loading chamber;
controlling the measurement mechanism to perform the weight measurement on the material entering the pre-loading chamber, obtaining a real-time weight value of the material; and
when determining that an acquisition state of the real-time weight value is normal and reaches the preset weight value, controlling the pre-loading chamber to transfer the material to the brewing chamber.

12. The control method for the intelligent fully automatic beverage device according to claim 11, wherein the intelligent fully automatic beverage device further comprises a grinding device disposed on the device body; and the grinding device comprises a grinding cylinder forming a grinding chamber, and a grinding mechanism for grinding the material within the grinding chamber;
the control method for the intelligent fully automatic beverage device comprises:
when receiving the work instruction, controlling the grinding mechanism to start operating, to pre-deliver the material into the pre-loading chamber;
controlling the measurement mechanism to perform the weight measurement on the material entering the pre-loading chamber, obtaining the real-time weight value of the material; and
when determining that the acquisition state of the real-time weight value is normal and reaches the preset weight value, controlling the pre-loading chamber to transfer the material to the brewing chamber.

13. The control method for the intelligent fully automatic beverage device according to claim 12, wherein after a step of controlling the measurement mechanism to perform the weight measurement on the material entering the pre-loading chamber and obtaining the real-time weight value of the material, the control method for the intelligent fully automatic beverage device further comprises:
when determining that the acquisition state of the real-time weight value is abnormal, controlling the grinding device to stop operating;
acquiring an anomaly type of the material, and according to the anomaly type, determining an adjustment scheme associated with the anomaly type; and
controlling the grinding device to execute an adjustment action according to the adjustment scheme.

14. The control method for the intelligent fully automatic beverage device according to claim 12, wherein before a step of, when receiving the work instruction, controlling the grinding mechanism to start operating, to pre-deliver the material into the pre-loading chamber, the control method for the intelligent fully automatic beverage device further comprises:
when receiving a calibration instruction, executing a calibration operation, wherein the calibration operation comprises:
controlling the grinding device to start operating to grind the material entering the grinding chamber;
controlling the measurement mechanism to perform the weight measurement on the material passing through the pre-loading chamber, obtaining a first calibration weight value of the material;
when determining that the first calibration weight value reaches the preset weight value, controlling the grinding device to stop operating, and acquiring an operating time of the grinding device; and
when the operating time differs from a preset time threshold, acquiring an operating parameter of the grinding device, and adjusting the operating parameter according to a preset rule;
repeating an execution of the calibration operation until the operating time reaches the preset time threshold.

15. An intelligent fully automatic beverage device, **characterized by** comprising:
a device body;
a brewing device disposed on the device body, the brewing device comprising a brewing cylinder forming a brewing chamber, and a brewing mechanism for extracting and brewing a material within the brewing chamber; and
a pre-loading device disposed on the device body, the pre-loading device comprising a pre-loading container forming a pre-loading chamber, and a measurement mechanism configured to measure a weight of the material entering the pre-loading chamber;
wherein at least one of the brewing cylinder and the pre-loading container is movably disposed relative to the device body, to be movable towards directions approaching each other and moving away from each other; and when the brewing cylinder and the pre-loading container move towards the direction approaching each other to a preset position, the pre-loading chamber and the brewing chamber are communicatively connected.

16. The intelligent fully automatic beverage device according to claim 15, wherein the brewing cylinder is fixed relative to the device body, the pre-loading container is located between a grinding cylinder and the brewing cylinder, and the pre-loading container is movably disposed in directions towards and away from the brewing cylinder.

17. The intelligent fully automatic beverage device according to claim 15, wherein the pre-loading container is fixed relative to the device body and located between a grinding cylinder and the brewing cylinder; and the brewing cylinder is movably disposed in directions towards and away from the pre-loading container.

18. An intelligent fully automatic beverage device, **characterized by** comprising:
a brewing device, the brewing device comprising a mounting plate, and a brewing cylinder and a brewing mechanism disposed on the mounting plate; the brewing cylinder forming a brewing chamber; the brewing mechanism being configured to extract and brew a material within the brewing chamber; and
a pre-loading device, the pre-loading device comprising a pre-loading container forming a pre-loading chamber, and a measurement mechanism configured to measure a weight of the material entering the pre-loading chamber;
wherein the mounting plate extends along a horizontal direction, the pre-loading container extends through the mounting plate, and at least one end portion of the pre-loading container in a vertical direction protrudes beyond a corresponding end surface of the mounting plate.

19. The intelligent fully automatic beverage device according to claim 18, wherein the mounting plate has a first surface and a second surface disposed opposite to the first surface in the vertical direction; and the first surface is located on an upper side of the second surface;
at least a part of the brewing mechanism is mounted on the first surface, and the brewing cylinder is mounted below the second surface.

20. The intelligent fully automatic beverage device according to claim 18, wherein an inner diameter of the brewing chamber at an own top end thereof is greater than an inner diameter at an own bottom end thereof.

21. The intelligent fully automatic beverage device according to claim 18, wherein a top end of the brewing cylinder is lower than a bottom end of the pre-loading container.

22. The intelligent fully automatic beverage device according to claim 18, wherein the mounting plate has a first surface and a second surface disposed opposite to the first surface in the vertical direction; and the first surface is located on an upper side of the second surface;
a bottom end of the pre-loading container and/or the second surface is extended downwardly with a dregs scraping plate.

23. A pre-loading device, **characterized by** comprising:
a measurement mechanism, comprising a mounting portion disposed at one end thereof and a measuring portion disposed at another end thereof;
a pre-loading container;
a mounting base;
an opening-closing component, movably mounted on the mounting base and enabling the pre-loading container to be in a closed state or an open state; and
a first driving mechanism, comprising a driver connected to the opening-closing component to control a movement of the opening-closing component;
wherein the measuring portion of the measurement mechanism and the mounting base are disposed on a same side of upper and lower ends of the pre-loading container; and the driver is disposed between the measurement mechanism and the mounting base, and is fixed on the mounting base.

24. The pre-loading device according to claim 23, wherein the opening-closing component is movably disposed at a bottom side of the mounting base, the driver and the opening-closing component are disposed on upper and lower sides of the mounting member, respectively.

25. The pre-loading device according to claim 23, wherein a bottom portion of the mounting base is recessed to form a mounting groove; a guide rail extending in directions towards and away from the pre-loading container is provided within the mounting groove; the opening-closing component is plate-shaped and covers an opening of the mounting groove; and the opening-closing component defines a guide groove extending into the mounting groove corresponding to the guide rail.

26. The pre-loading device according to claim 23, wherein the driver drives the guide groove to slide along the guide rail to further drive the opening-closing component to slide back and forth below the mounting base.

27. The pre-loading device according to claim 24, wherein a bottom portion of the mounting base is recessed to form a mounting groove; a guide rod extending in directions towards and away from the pre-loading container is provided within the mounting groove; the first driving mechanism comprises a rotary output shaft extending downwardly into the mounting groove, a driving gear, and a translational rack; the driving gear is located within the mounting groove and mounted on the rotary output shaft of the driver; the translational rack is sleeved on the guide rod; and the driving gear is rotatably drivable to drive the translational rack to move horizontally back and forth along the guide rod.

28. The pre-loading device according to claim 27, wherein the opening-closing component is mounted on the translational rack and shields the translational rack within the mounting groove.

29. The pre-loading device according to claim 28, wherein a pair of guide rods are disposed within the mounting groove, and wherein one of the guide rods is slidably connected to the translational rack, and a remaining one of the guide rods is provided with a guide block for sliding connection; and both the translational rack and the guide block are fixed to the opening-closing component.

30. The pre-loading device according to claim 23, wherein an axis of the rotary output shaft of the driver is B1, an axis of the measuring portion of the measurement mechanism in a same direction is B2, and a center of gravity of the entire pre-loading device is located between B1 and B2.

31. An intelligent fully automatic beverage device, **characterized by** comprising:
a device body;
a brewing device disposed on the device body, and the brewing device comprising a brewing cylinder forming a brewing chamber; and
a pre-loading device disposed on the device body, the pre-loading device comprising a measurement mechanism, a pre-loading container fixed to the measurement mechanism, a mounting base fixedly connected to the pre-loading container, an opening-closing component installed on the mounting base, and a first driving mechanism installed on the mounting base to drive the opening-closing component;
wherein the measurement mechanism is fixed to the device body or the brewing device, such that the device body or the brewing device, and the pre-loading container are fixed at two ends of the measurement mechanism, respectively.

32. The intelligent fully automatic beverage device according to claim 31, wherein the mounting base and the first driving mechanism are located below a fixing position where the measurement mechanism is fixed to the device body.

33. The intelligent fully automatic beverage device according to claim 31, wherein the opening-closing component is fixedly installed below the mounting base, and is movable to open or close a bottom of the pre-loading container.

34. The intelligent fully automatic beverage device according to claim 33, wherein when the brewing cylinder moves to be located below the pre-loading container, the opening-closing component is in a state of closing the pre-loading container.

35. The intelligent fully automatic beverage device according to claim 31, wherein the brewing device comprises a mounting plate, the brewing cylinder is disposed below the mounting plate, and at least one end of the pre-loading container in a vertical direction protrudes beyond a surface of the mounting plate.

36. The intelligent fully automatic beverage device according to claim 31, wherein an inner diameter of a top end of the brewing cylinder is greater than an inner diameter of a bottom end of the pre-loading container.

37. The intelligent fully automatic beverage device according to claim 31, wherein the brewing cylinder is disposed below the pre-loading container, and a dregs scraping plate is provided and disposed below the pre-loading container.

38. The intelligent fully automatic beverage device according to claim 32, wherein at least one of the brewing cylinder and the pre-loading container is movably disposed relative to the device body to move towards directions approaching each other and moving away from each other.

39. The intelligent fully automatic beverage device according to claim 31, further comprising a grinding device.

40. The intelligent fully automatic beverage device according to claim 39, wherein the measurement mechanism comprises a mounting portion disposed at one end thereof and a measuring portion disposed at another end thereof; and the mounting portion is fixed on the device body or installed on the grinding device.

41. An intelligent fully automatic beverage device, **characterized by** comprising:
a device body;
a grinding device placed within the device body;
a brewing device placed within the device body, and the brewing device comprising a movable brewing cylinder; and
a pre-loading device placed within the device body, and the pre-loading device comprising a pre-loading container and a measurement mechanism for measuring a weight of the pre-loading container and a material inside the pre-loading container;
wherein different positions including a powder receiving position and a brewing position are set within the device body; the brewing cylinder reciprocates between the powder receiving position and the brewing position; and when the brewing cylinder, the grinding device and the pre-loading container are moved close to one another to reach a proximate state, the brewing cylinder is located at the powder receiving position.

42. The intelligent fully automatic beverage device according to claim 41, wherein a movement switching of the brewing cylinder between the powder receiving position and the brewing position is a horizontal translational motion; or an inclined motion relative to a horizontal direction or a vertical direction; or a rotational motion about any axis.

43. The intelligent fully automatic beverage device according to claim 41, wherein powder after being ground by the grinding device first enters the pre-loading container and is weighed by the measurement mechanism before entering the brewing cylinder.

44. The intelligent fully automatic beverage device according to claim 42, wherein when the brewing cylinder moves to the powder receiving position, the pre-loading container already contains powder material ground by the grinding device, and the powder material has been weighed by the measurement mechanism and has reached a preset weight.

45. The intelligent fully automatic beverage device according to claim 42, wherein after the brewing cylinder moves to the powder receiving position, the grinding device starts to operate, grinding powder material into the pre-loading container; and when the weight measured by the measurement mechanism reaches a preset weight, the grinding device stops operating.

46. The intelligent fully automatic beverage device according to any one of claims 44 or 45, wherein an inner diameter of a top end of the brewing cylinder is greater than an inner diameter of a bottom end of the pre-loading container.

47. The intelligent fully automatic beverage device according to claim 41, wherein projections of the grinding device, the pre-loading device, and the brewing device in a vertical direction at least partially overlap.

48. An intelligent fully automatic beverage device, **characterized by** comprising:
a device body;
a grinding device placed within the device body;
a brewing device placed within the device body, and the brewing device comprising a brewing cylinder; and
a pre-loading device, movably placed within the device body, the pre-loading device comprising a pre-loading container and a measurement mechanism for measuring a weight of the pre-loading container and a material inside the pre-loading container;
wherein the pre-loading device is movably disposed between the grinding device and the brewing device, and is movable in directions towards and away from the brewing cylinder.

49. The intelligent fully automatic beverage device according to claim 48, wherein the grinding device and the brewing device are spaced apart and offset from each other; and the pre-loading device is configured to perform a linear or curvilinear translational motion along any direction, or a rotational motion about any axis.

50. The intelligent fully automatic beverage device according to claim 49, wherein the pre-loading container comprises an opening-closing component for closing a bottom thereof, and a second driving mechanism for driving the opening-closing component to open or close; the second driving mechanism closes the pre-loading container when the pre-loading container moves to be located at a powder receiving position, and opens the pre-loading container when the pre-loading container moves to be located at a brewing position.

51. A control method for an intelligent fully automatic beverage device, **characterized by** comprising:
a device body;
a grinding device, disposed within the device body;
a brewing device, placed within the device body, and the brewing device comprising a movable brewing cylinder; and
a pre-loading device, placed within the device body, the pre-loading device comprising a pre-loading container and a measurement mechanism for measuring a weight of the pre-loading container and a material inside the pre-loading container;
the control method for the intelligent fully automatic beverage device comprises:
when receiving a work instruction, moving the pre-loading device downstream of the grinding device; controlling the grinding device to start operating to output powder material into the pre-loading container; and the measurement mechanism performing real-time measurement on the powder material entering the pre-loading container to obtain a real-time weight value of the powder material;
when determining that the real-time weight value reaches a preset weight value, controlling the grinding device to stop, and moving the pre-loading device to the brewing device to transfer the powder material into the brewing device.

52. The control method for the intelligent fully automatic beverage device according to claim 51, wherein the grinding device and the brewing device are spaced apart and offset from each other; and the pre-loading device is configured to perform a linear or curvilinear translational motion along any direction, or a rotational motion about any axis.

53. The control method for the intelligent fully automatic beverage device according to claim 51, wherein the brewing cylinder is disposed below the pre-loading container, and a dregs scraping plate is provided and disposed at a bottom end of the pre-loading container.

54. The control method for the intelligent fully automatic beverage device according to claim 51, wherein an inner diameter of a top end of the brewing cylinder is greater than an inner diameter of a bottom end of the pre-loading container.

55. An intelligent fully automatic beverage device, **characterized by** comprising:
a device body;
a grinding device, disposed within the device body;
a pre-loading device, disposed on the device body, the pre-loading device comprising a pre-loading container forming a pre-loading chamber, and a measurement mechanism configured to measure a weight of a material entering the pre-loading chamber from the grinding device; and
a control device, connected to the measurement mechanism and the grinding device; the control device controlling the grinding device to grind powder material into the pre-loading device; and when determining that a material weight value measured by the measurement mechanism reaches a preset weight value, instructing the grinding device to stop working;
a brewing device, detachably disposed relative to the pre-loading device; wherein when the brewing device is located at a powder receiving position, the grinding device starts grinding, and the pre-loading device obtains powder of the preset weight and transfers the power into the brewing device.

56. The intelligent fully automatic beverage device according to claim 55, wherein when the brewing device is located at the powder receiving position, the brewing device at least partially overlaps with the pre-loading device in a height direction.

57. The intelligent fully automatic beverage device according to claim 55, wherein the brewing device is built into the device body or disposed external to the device body.

58. The intelligent fully automatic beverage device according to claim 55, wherein the grinding device is configured to pre-grind the powder material of the preset weight and store the powder material in the pre-loading container; and then when the brewing device is located at the powder receiving position, the powder material is transferred into the brewing device.
